# EUROPÄISCHE PATENTSCHRIFT

(11) **EP 2 552 851 B1**
(45) Veröffentlichungstag und Bekanntmachung des Hinweises auf die Patenterteilung: **28.04.2021**
(21) Anmeldenummer: 11711098.1
(22) Anmeldetag: 30.03.2011
(51) Int. Cl.: C04B 24/42, C04B 28/02, C04B 40/00

(54) **HÄRTBARE MISCHUNG MIT "EASY-TO-CLEAN"-EIGENSCHAFTEN**
CURABLE MIXTURE WITH "EASY-TO-CLEAN" PROPERTIES
MÉLANGE DURCISSABLE AVEC DES PROPRIÉTÉS FACILES À NETTOYER

(30) Priorität: 01.04.2010 DE 102010003589
(43) Veröffentlichungstag der Anmeldung: 06.02.2013
(73) Patentinhaber: Evonik Operations GmbH, 45128 Essen (DE); Celanese Switzerland AG, 6203 Sempach Station (CH)
(72) Erfinder: FRIEDEL, Manuel, CH-8048 Zürich (CH); ALBERT, Philipp, 79539 Lörrach (DE); STANDKE, Burkhard, 79540 Lörrach (DE); LJESIC, Spomenko, 79618 Rheinfelden (DE); KEHRER, Ulf, 65795 Hattersheim (DE)
(74) Vertreter: Evonik Patent Association
(86) Internationale Anmeldenummer: PCT/EP2011/054914
(87) Internationale Veröffentlichungsnummer: WO 2011/121027

(56) Entgegenhaltungen:
- EP-A1- 0 278 518
- EP-A1- 0 826 650
- EP-A1- 1 982 964
- EP-A2- 0 228 657
- WO-A1-2008/062018
- WO-A1-2010/052201
- DE-A1- 10 062 585
- DE-A1- 19 649 955
- DE-A1-102008 007 190

## Beschreibung

Die vorliegende Erfindung betrifft eine härtbare Mischung, die Verwendung eines in Wasser redispergierbaren Pulvers in der härtbaren Mischung und die Verwendung der härtbaren Mischung, wobei die ausgehärtete Mischung "easy-to-clean"-Eigenschaften besitzt und die Verwendung des Pulvers gemäß Anspruch 1 in einer härtbaren Mischung zur Erzeugung von "easy-to-clean"-Eigenschaften.

Das in Wasser redispergierbare Pulver wird hier und nachfolgend als eine fluororganylsubstituierte Silicium-Verbindung, die in einem wasserlöslichen Polymer eingekapselt oder verkapselt und getrocknet ist, bezeichnet, zuvor und nachfolgende auch kurz Pulver genannt.

Härtbare Mischungen, beispielsweise hydraulisch abbindende Materialien wie zementgebundene Werkstoffe, werden im modernen Bauwesen an zahlreichen relevanten Stellen verwendet, so zum Beispiel für die Herstellung von Betonpflastersteine für Einfahrten, Gehwege oder Terrassen, für Fugen und Oberflächenbeschichtungen aller Art wie beispielsweise Putze. Im Außen- wie im Innenbereich stellen die Verschmutzung der Oberflächen solcher gehärteten Mischungen durch verschiedenste Materialien, wie zum Beispiel Verkehrs- und Industrieabgase, insbesondere Ruße, Blütenpollen, Grasflecken, Öle, insbesondere Motoröle, Kosmetika, Getränke- und Speiserückstände, insbesondere Cola, Kaffee, Rotwein oder Ketchup, sowie durch das Wachstum von Mikroorganismen, wie Algen oder Pilzen, ein aus ästhetischer Sicht großes Problem dar. Die Ausstattung gehärteter Mischungen, insbesondere hydraulisch abgebundener Werkstoffe, in solchen Anwendungen mit Schmutz abweisenden Eigenschaften [im Folgenden auch "easy-to-clean" ("einfach zu reinigen") oder ETC genannt] ist daher wünschenswert.

Unter Schmutz abweisenden Eigenschaften ist die Eigenschaft der Oberfläche zu verstehen, das Eindringen von sowohl wässrigen als auch öligen Substanzen in den Werkstoff zu verhindern und das Entfernen dieser Substanzen von der Oberfläche zu erleichtern. Zudem sollen auf Schmutz abweisenden Oberflächen auch Farben, Lacke, Stäube, aber auch der Bewuchs verschiedenster Materialien wie beispielsweise Moos und Algen leicht abzureinigen sein. Die Ausprüfung der Verschmutzungseigenschaften kann nach DIN EN ISO 10545-14 erfolgen. Somit sollen Materialien, die solche "easy-to-clean"-Eigenschaften aufweisen, nicht nur wasserabweisend, also hydrophobierend sein, sondern auch Öl abweisende, also oleophobierende Eigenschaften besitzen.

Es ist bekannt, "easy-to-clean"-Eigenschaften durch eine Nachbehandlung fertiger, ausgehärteter Oberflächen mit verschiedenen Materialien zu erzeugen. So lehrt u. a. EP 0 838 467 den Einsatz eines fluorhaltigen Silans bzw. Silansystems zur Oberflächenvergütung. Nachteil von solchen Systemen zur Nachbehandlung einer Oberfläche ist einerseits die Notwendigkeit eines weiteren Prozessschrittes nach der Herstellung solcher Materialien bzw. Werkstoffe, andererseits ist häufig die Dauerhaftigkeit solcher Beschichtungen zu gering, da sie durch Bewitterung und Abrieb abgetragen werden.

Es ist weiterhin bekannt, hydraulisch erhärtende Materialien, insbesondere zementgebundene Werkstoffe, durch den Zusatz von Massenmodifizierungsmittel zu verbessern. So lehrt die EP 0 913 370 den Einsatz von wässrigen, silanhaltigen Emulsionen zur Erzielung von Wasser abweisenden (hydrophoben) Eigenschaften solcher Materialien. Leider führt die Lehre nicht zu den gewünschten "easy-to-clean"-Oberflächen. Zudem sind mit Fluor funktionalisierte Silicium-Verbindungen nicht erwähnt.

Aus US 5,650,004 ist eine zementgebundene Putzmischung bekannt, die für die Abdichtung von Schwimmbädern eingesetzt wird. Die Wasser abweisenden Eigenschaften und eine verbesserte Dauerhaftigkeit der Putzmischung werden durch den Zusatz von silanmodifizierten Pulvern und puzzolanischen Füllstoffen erreicht. Nachteil dieser Putzmischung ist, dass zwar dauerhaft Wasser abweisende Eigenschaften erzielt werden können, also auch wässrige Verschmutzungen abgewiesen werden können, aber keine Schmutz abweisenden Eigenschaften im oben beschriebenen Sinne erzielt werden. Fluor enthaltende Silicium-Verbindungen sind zudem auch nicht genannt.

Aus DE 10 346 082 sind komplexe hydraulisch erhärtende Mischungen bekannt, deren spezielle Mischung zu einem veränderten Gefüge führt. Dadurch werden verschleißfeste Werkstücke mit bedingt Schmutz abweisenden Oberflächen erhalten. Fluor enthaltende Silicium-Verbindungen sind nicht erwähnt.

Aus EP 1 445 242 sind nichtzementgebundene Putze bzw. Beschichtungen für Fassaden bekannt, die Schmutz abweisende Eigenschaften aufweisen. Die Schmutz abweisenden Eigenschaften werden erreicht, indem die Mikrorauhigkeit derart verringert wird, dass Schmutzpartikel nicht in den Porenraum eindringen und festsetzen können. Nachteil dabei ist, dass kaliwasserglasbasierte, nichtzementgebundene Putzmischungen als solche modifiziert werden. Zudem sind fluorhaltige Silicium-Verbindungen nicht erwähnt.

EP 1 262 464 beschreibt ein Zement enthaltendes Mörtelpulver, wobei mindestens eine Komponente, beispielsweise das Zementpulver oder Quarzteilchen des Mörtelpulvers auf ihrer Oberfläche mit einer fluorchemischen Verbindung, beispielsweise ein Silan, behandelt worden ist. Die Herstellung dieser mit einer fluorchemischen Verbindung beschichteten Mörtelkomponenten ist komplex und umfasst u. a. die Umsetzung der Zement-haltigen Mischung mit Wasser, organischem Lösungsmittel und der fluorchemischen Verbindung, gefolgt vom anschließenden Trocknen und Homogenisieren. Die vorbehandelten Mörtelpulver zeigen, nachdem sie mit Wasser angerührt, appliziert und ausgehärtet sind, Öl und Wasser abweisende Eigenschaften. Da mindestens eine Komponente solcher Mörtelpulver mit einer fluorchemischen Verbindung vorbehandelt wurde, zeigen solche Mörtel schon beim Anrühren mit Wasser hydrophobierende, d. h. Wasser abweisende Eigenschaften, was zu einer sehr schlechten Benetzung führt.

Wie aus dem Stande der Technik zu entnehmen ist, können insbesondere anorganische Substratoberflächen durch nachträglichen oberflächlichen Auftrag von fluororganylsubstituierter Silicium-Verbindungen mit "easy-to-clean"-Eigenschaften ausgestattet werden, was einen zusätzlichen Arbeitsschritt erfordert. Tritt dann eine Beschädigung der so behandelten Substratoberfläche auf, beispielsweise bei einer mechanischen Beanspruchung durch Abrieb, verschwinden mit dem von der Oberfläche abgetragenen Substrat auch die "easy-to-clean"-Eigenschaften.

EP 278 518 A1 betrifft Verfahren zur Herstellung von wasserabweisenden Gegenständen aus Gips unter Verwendung von Si-gebundenem Wasserstoff enthaltenden Organopolysiloxan das in Form eines Pulvers eingesetzt wird. Das Pulver kann mittels Sprühtrocknung hergestellt werden. WO 2008/062018 A1 betrifft Additive auf einem partikulären Trägermaterial Hydrophobierung zementgebundener Baustoffe. EP 228 657 A2 offenbart sprühgetrocknete in Wasser redispergierbare, wasserlösliche Pulver enthaltend organische Siliciumverbindungen. EP 826 650 A1 offenbart wässrige Zusammensetzungen von fluorierten, siliciumorganischen Verbindungen zur oberflächlichen Auftragung auf saugfähige Substrate wie Granit.

Der vorliegenden Erfindung lag daher die Aufgabe zugrunde, eine härtbare Mischung zur Verfügung zu stellen, wobei die ausgehärtete Mischung mit möglichst wenigen Arbeitsschritten herstellbar ist. Zudem soll die ausgehärtete Mischung, und insbesondere deren Oberfläche, ausreichend gute Schmutz abweisende Eigenschaften aufweist, wobei solche "easy-to-clean"-Eigenschaften insbesondere auch nach einer Beschädigung der Oberfläche möglichst dauerhaft sind.

Diese Aufgabe wird erfindungsgemäß entsprechend den Merkmalen der Patentansprüche gelöst.

Überraschenderweise wurde nun gefunden, dass durch die Zugabe von mindestens einer fluororganylsubstituierten Silicium-Verbindung, insbesondere eines fluororganylsubstituierten Silans und/oder fluororganylsubstituierten Siloxans, zu einer härtbaren Mischungen, beispielsweise zu einer hydraulisch abbindenden Mischung, insbesondere zu einer ansonsten gängigen Betonmischung oder zu einem Mörtel, durchgängige und dadurch dauerhafte "easy-to-clean"-Eigenschaften eines daraus hergestellten gehärteten Werkstoffs, der gegebenenfalls hydraulisch abgebundenen sein kann, erzielt werden können.

Gegenstand der vorliegenden Erfindung ist somit eine härtbare Mischung, geeignet um in der ausgehärteten Mischung "easy-to-clean"-Eigenschaften zu erhalten, enthaltend
- mindestens ein mineralisches Bindemittel,
- ein Pulver umfassend mindestens eine fluororganylsubstituierte Silicium-Verbindung, die in einem wasserlöslichen Polymer eingekapselt ist, wobei die Menge der fluororganylsubstituierten Silicium-Verbindung 0,001 bis 8 Gew.-%, bezogen auf die vorliegende Mischung, beträgt, wobei das wasserlösliche Polymer und die Silicium-Verbindung Partikel bilden, die in Wasser dispergierbar und/ oder redispergierbar sind, wobei das wasserlösliche Polymer ausgewählt ist aus der Reihe der Polysaccharide, Polysaccharidether, Proteine, Vinyl-Polymerisate, Formaldehyd-Kondensate und Alkylenoxid-Polymerisate, und
- optional weitere Zusatzstoffe.

Die Mengenangaben zu den eingesetzten Komponenten - wenn nicht anders angegeben - beziehen sich auf die Summe der in der jeweiligen Mischung vorliegenden Komponenten, sie sind in Gew.-% angegeben und zudem ergeben sie in Summe 100 Gew.-%. Im Rahmen der vorliegenden Erfindung wird unter härtbarer Mischung auch eine härtbare Zusammensetzung verstanden.

Es wurde überraschenderweise beobachtet, dass die erfindungsgemäße Mischung schon mit geringsten Mengen einer fluororganylsubstituierten Silicium-Verbindung hervorragende "easy-to-clean"-Eigenschaften besitzt. Das hier eingesetzte Pulver, und damit die fluororganylsubstituierte Silicium-Verbindung, wird in der ganzen Masse der härtbaren Mischung homogen verteilt, sodass die ganze später ausgehärtete Masse sowohl hydrophobiert wie auch oleophobiert wird. Dies ist vor allem dann wichtig, wenn die Oberfläche beispielsweise durch Abrieb oder durch Risse beschädigt wird. Zudem wurde gefunden, dass trotz den ausgeprägten hydrophoben und oleophoben Eigenschaften die erfindungsgemäße Mischung eine gute Adhäsion auf verschiedensten Substraten aufweist, was im Gegensatz zu den Erwartungen des Fachmanns ist. Silane haben oft eine verflüssigende Wirkung auf Zubereitungen. Ein Vorteil der erfindungsgemäßen härtbaren Mischung, enthaltend ein Pulver umfassend mindestens eine fluororganylsubstituierte Silicium-Verbindungen, ist, dass überraschenderweise die Grünstandfestigkeit nicht nachteilig beeinflusst wird. Somit wird die Fliessgrenze der mit Wasser gemischten härtbaren Mischung durch den Einsatz der fluororganylsubstituierten Silicium-Verbindungen nicht oder nur unwesentlich beeinflusst.

Die Offenbarung zeigt auch ein Verfahren zur Herstellung der erfindungsgemäßen härtbaren Mischung umfassend en Schritt des Mischens mindestens eines Pulvers umfassend mindestens eine fluororganylsubstituierte Silicium-Verbindung, die in einem wasserlöslichen Polymer eingekapselt ist, mit mindestens einer Komponente der härtbaren Mischung. Nach dem Aushärten der Mischung weist sie in der ganzen Masse, und nicht nur auf der Oberfläche, alle vorteilhaften "easy-to-clean"-Eigenschaften auf.

Es war überraschend, dass die fluororganylsubstituierte Silicium-Verbindung einerseits mit bekannten Verfahren und Materialien in einer Flüssigkeit zu stabilen Gemischen dispergiert werden kann. Damit können Emulsionen, im Rahmen der Erfindung auch Dispersionen genannt, erhalten werden, die gegebenenfalls auch eine äußerst kleine Teilchengröße von beispielsweise deutlich weniger als 2 µm (Volumenmittel) aufweisen können. Andererseits konnte nicht erwartet werden, dass die Stabilisierung der in einer Flüssigkeit dispergierten fluororganylsubstituierten Silicium-Verbindung in der härtbaren Mischung genügend stabil ist, um mit den anderen Komponenten der härtbaren Mischung gut vermischt zu werden, jedoch genügend instabil ist, um aufzubrechen, sodass die fluororganylsubstituierten Silicium-Verbindung hydrolysieren und anschließend weiter reagieren, beispielsweise kondensieren, kann, um so die gewünschten "easy-to-clean"-Eigenschaften in einer ausgehärteten Mischung zu erzielen.

Denn um in der ausgehärteten Mischung die gewünschten "easy-to-clean"-Eigenschaften zu erhalten, müssen verschiedenste komplexe Prozesse und Reaktionen zur richtigen Zeit ablaufen. So wird angenommen, dass einerseits die fluororganylsubstituierte Silicium-Verbindung sich in der ganzen Matrix der härtbaren Mischung homogen verteilen muss. Ist die Silicium-Verbindung in einer Flüssigkeit dispergiert und wird sie in dieser Form zudosiert, soll die Dispersion so stabil sein, dass sie nicht sofort oder verspätet - sondern zur richtigen Zeit - aufbricht und die Silicium-Verbindung, insbesondere hydrolysierbare Silicium-Verbindungen, wie Alkoxy-Gruppen enthaltende Silicium-Verbindungen, freisetzt. Liegt zudem die fluororganylsubstituierte Silicium-Verbindung in Form eines Pulvers vor, insbesondere als ein in Wasser redispergierbares Pulver, und wird diese in dieser Form zudosiert, können die einzelnen Dispersionsteilchen vorteilhaft redispergieren, bevor die oben genannten Prozesse zur richtigen Zeit ablaufen. Um den gewünschten "easy-to-clean"-Effekt in der ausgehärteten Mischung zu erzielen, erwartet der Fachmann, ohne an eine Theorie gebunden zu sein, dass die Summe dieser Prozesse in der richtigen Reihenfolge ablaufen und im Wesentlichen abgeschlossen sein müssen, bevor die Aushärtung der härtbaren Mischung und dem damit verbundenen Erstarren der Mischung beginnt. Allerdings ist es nicht möglich beim Ablauf dieser komplexen Prozesse regulierend einzugreifen.

So war es für den Fachmann überraschend, dass die Kinetik dieser verschiedenen Prozesse sich so optimal verhalten, dass schon geringste Mengen einer fluororganylsubstituierten Silicium-Verbindung hervorragende "easy-to-clean"-Eigenschaften aufweisen. Und dies umso mehr, als dass die Materialeigenschaften, wie beispielsweise die Grenzflächenspannung, von fluororganylsubstituierten Silicium-Verbindungen sich aufgrund der Fluor-Substitution wesentlich von anderen Silicium-Verbindungen unterscheiden.

Zudem üben die hohe lonogenität und Alkalinität, wie sie insbesondere bei wässrigen härtbaren Mischungen auf Basis eines beispielsweise hydraulisch abbindenden Bindemittels vorkommen, wie bei wässrigen zementären Systemen, einen starken Einfluss auf Stabilität von solchen Dispersionen aus. Trotzdem werden hervorragende "easy-to-clean"-Eigenschaften nicht nur an der Oberfläche der ausgehärteten Mischung, sondern auch innerhalb der Mischung selber, erhalten.

Beansprucht wird auch die Verwendung eines Pulver gemäß Anspruch 1 in einer hydraulisch härtbaren Mischung enthaltend 2 bis 60 Gew.-%, vorzugsweise 6 bis 25 Gew.-%, besonders vorzugsweise 10 bis 20 Gew.-%, ganz besonders vorzugsweise 18 Gew.-% Zement, 30 bis 90 Gew.-%, vorzugsweise 50 bis 90 Gew.-%, besonders vorzugsweise 65 bis 85 Gew.-%, ganz besonders vorzugsweise 70 bis 80 Gew.-% mindestens eines Zuschlagstoffs, 0,001 bis 8 Gew.-%, vorzugsweise 0,01 bis 6 Gew.-%, besonders vorzugsweise 0,02 bis 5 Gew.-%, ganz besonders vorzugsweise 0,05 bis 2 Gew.-% der fluororganylsubstituierte Silicium-Verbindung und gegebenenfalls weiterer Hilfsmittel, um in der ausgehärteten Mischung "easy-to-clean"-Eigenschaften zu erhalten. Die vorherigen Angaben in Gew.-% sind jeweils auf die vorliegende Mischung bezogen.

Die fluororganylsubstituierte Silicium-Verbindung, die in einem wasserlöslichen Polymer eingekapselt ist, liegt in Form eines Pulvers vor und wird somit als Pulver in der härtbaren Mischung eingesetzt. Ist das Pulver in Wasser redispergierbar, kann auch die entsprechende wässrige Redispersion, die eine wässrige Emulsion bildet, als Komponente der härtbaren Mischung eingesetzt werden. Insofern ist sie auch ein Zwischenprodukt bei der Herstellung des Pulvers. Wird das Pulver - in einer nicht beanspruchten Ausführungsform - durch Trocknung einer beispielsweise wässrigen

Emulsion oder Dispersion erhalten, ist es zudem auch möglich, die entsprechende Emulsion oder Dispersion direkt als Komponente der härtbaren Mischung einzusetzen. Solche Emulsionen oder Dispersionen werden in der Regel erhalten, wenn das wasserlösliche Polymer und die darin eingekapselte fluororganylsubstituierte Silicium-Verbindung Partikel - oder Tröpfchen - bilden. Solche Partikel sind bevorzugt in Wasser emulgierbar, dispergierbar und/ oder redispergierbar. Unabhängig ob das Zwischenprodukt, das daraus hergestellte erfindungsgemäße Pulver, oder die Redispersion des in Wasser redispergierten Pulvers in der härtbaren Mischung oder dem Verfahren zur Herstellung einer solchen Mischung eingesetzt wird, es werden in der ausgehärteten Mischung immer die gleich vorteilhaften "easy-to-clean"-Eigenschaften erhalten.

Überraschenderweise zeigt die Verwendung des Pulvers in einer härtbaren, insbesondere in einer hydraulisch härtbaren Mischung, keine negativen Eigenschaften. Das Pulver kann in den bekannten Rezepturen eingesetzt werden, ohne dass wesentliche Rezeptur Anpassungen gemacht werden müssen. So bleiben beispielsweise die Benetzbarkeit, die Verarbeitbarkeit, der Wasserbedarf um die gleiche Konsistenz zu erhalten und die Hydratation unverändert oder sie werden sogar noch verbessert.

Gegenstand der Erfindung ist eine Verwendung des in Wasser redispergierbaren Pulvers umfassend ein wasserlösliches Polymer mit einer oder mehreren darin eingekapselten organischen Silizium-Verbindungen, wobei mindestens eine organische Silizium-Verbindung ganz oder teilweise fluoriert ist und, wenn Mischungen von fluroorganylsubstituierten und nicht fluororganylsubstituierten Silicium-Verbindungen eingesetzt werden, der Anteil der fluorsubstituierten Silicium-Verbindung mindestens 25 Gew.-%, bezogen auf die Gesamtmenge der eingesetzten Silicium-Verbindung, beträgt, wobei das wasserlösliche Polymer und die Silicium-Verbindung Partikel bilden, die in Wasser dispergierbar und/ oder redispergierbar sind, wobei das wasserlösliche Polymer ausgewählt ist aus der Reihe der Polysaccharide, Polysaccharidether, Proteine, Vinyl-Polymerisate, Formaldehyd-Kondensate und Alkylenoxid-Polymerisate in einer härtenden Mischung enthaltend mindestens ein mineralisches Bindemittel,
in einer härtenden Mischung, um in der ausgehärteten Mischung "easy-to-clean"- Eigenschaften zu erhalten.

Gegenstand der Erfindung ist auch die Verwendung des in Wasser redispergierbaren Pulvers, welches in Mischungen, Verfahren und bei der Verwendung der härtbaren Mischung eingesetzt werden kann und geeignet ist, um in der ausgehärteten Mischung "easy-to-clean"-Eigenschaften zu erhalten, umfassend ein wasserlösliches Polymer mit einer oder mehreren organischen bzw. fluororganylsubstituierten Silizium-Verbindungen, die im wasserlöslichen Polymer verteilt sind, wobei mindestens eine organische Silizium-Verbindung ganz oder teilweise fluoriert ist.

Hergestellt werden kann das Pulver in einem Verfahren, in dem
- Wasser,
- mindestens ein wasserlösliches Polymer,
- mindestens eine wasserunlösliche fluororganylsubstituierte Silicium-Verbindung und
- gegebenenfalls weitere Additive
bei einem pH zwischen 4 und 9, vorzugsweise zwischen 4,5 und 8,5, insbesondere zwischen 5 und 8, zu einem Zwischenprodukt gemischt und anschließend getrocknet wird, wobei die Trocknung bevorzugt durch Sprühtrocknung erfolgt.

Die eingangs erwähnte Aufgabe kann in besonders überraschender und besonders vorteilhafter Weise gelöst werden, wenn man die zur Erzeugung der im Substrat bzw. Baustoff angestrebten, permanenten bzw. durchgehenden "easy-to-clean"-Eigenschaften durch das homogene Einbringen des Pulvers, das eine fluororganylsubstituierte Silicium-Verbindungen enthält, bereits in die trockene Baumischung oder beim Anmachen einer härtbaren Baumischung, insbesondere vor der Zugabe von Wasser, einbringt. So kann eine erfindungsgemäß eingesetzte fluororganylsubstituierte Silicium-Verbindungen vorteilhaft in rieselfähiger Form und lagerstabil bis zur Applikation gelagert und darüber hinaus einfach und unproblematisch gehandhabt werden, beispielsweise beim Abfüllen in Säcke, beim Transport, beim Abwiegen und beim Dosieren. Insbesondere sind dadurch die erfindungsgemäß verwendeten fluororganylsubstituierten Silicium-Verbindungen auch vor beginnender Hydrolyse geschützt, da die Tröpfchen enthaltend die fluororganylsubstituierte Silicium-Verbindung vom wasserlöslichen Polymer umhüllt bzw. verkapselt sind. So können sie ihre besondere Wirkung in der härtbaren Mischung, beispielsweise Baustoffmischung, insbesondere bei hydraulisch abbindenden Mischungen, vorzugsweise zementhaltiger Mischungen, z. B. Betonmischungen, als homogen verteilte Komponente im Zusammenspiel mit Anmachwasser und dem dann vorherrschenden alkalischen pH-Wert entfalten, wobei dann Hydrolyse der eingesetzten fluororganylalkoxysubstituierten Silicium-Verbindungen und Reaktion mit den vorliegenden Komponenten der Baustoffmischung eintritt. Ein so ausgehärteter Werkstoff weist in vorteilhafter Weise die gewünschte Massenmodifizierung, insbesondere eine gute Massenhydrophobierung und Massenoleophobierung, auf, wodurch durchgehende bzw. permanente und insbesondere homogene "easy-to-clean"-Eigenschaften erzielt werden.

Das erfindungsgemäß verwendete Pulver kann überraschenderweise mit bekannten Verfahren und Materialien hergestellt werden. Ein besonderer Vorteil des Pulvers, d.h. von Pulvern enthaltend fluororganylsubstituierte Silicium-Verbindungen, ist, dass damit besonders homogene Trockenmischungen und Zubereitung von besonders homogenen Mischungen werksseitig hergestellt werden können, welche vor Ort lediglich mit Wasser angerührt werden müssen. Die hergestellten ausgehärteten Mischungen weisen ebenfalls die vorteilhaften "easy-to-clean"-Eigenschaften auf.

Zudem zeichnet sich das erfindungsgemäß verwendete Pulver durch eine gute Block- und Lagerstabilität aus, d.h. die fluororganylsubstituierte Silicium-Verbindung wird genügend verkapselt, sodass sie weder bei der Herstellung des Pulvers noch bei dessen Lagerung verdunstet und das Pulver bleibt rieselfähig. Zudem zeigt das Pulver, insbesondere als Teil der härtbaren Mischung, beim Vermischen mit Wasser eine hervorragende Benetzung und anschließende gute Verarbeitungseigenschaften, d. h. die hydrophoben und oleophoben Eigenschaften zeigen sich erst nach der Aushärtung der Mischung. Wird eine monomere Verbindung mit Alkoxy-Gruppen, beispielsweise ein Fluoralkylalkoxysilan, eingesetzt, liegt die besagte Silicium-Verbindung im erfindungsgemäßen Pulver typischerweise unhydrolysiert und in monomerer Form vor, d. h. nicht mehr als 10 %, insbesondere nicht mehr als 5 % der vorliegenden Alkoxy-Gruppen der Silicium-Verbindung sind hydrolysiert. Dies ermöglicht, dass die reaktiven Gruppen, insbesondere die Alkoxy-Gruppen, bei der Herstellung und Lagerung des erfindungsgemäßen Pulvers und dessen Vermischen mit der härtbaren Mischung - sofern bei der Herstellung der Mischung noch ohne Wasser gearbeitet wird - erhalten bleiben. Nach Zugabe und Vermischen mit Wasser werden dann die Alkoxy-Gruppen hydrolysiert, wobei durch die nachfolgende Weiterreaktionen die gewünschten, vorteilhaften Eigenschaften erzielt werden.

Die erfindungsgemäße härtbare Mischung umfasst insbesondere Betonbezogene Mischungen und Mörtel. Unter Beton-bezogenen Mischungen versteht der Fachmann trockene Betonmischungen, mit Wasser angemachter Beton sowie ausgehärteter Beton, nachfolgend zusammen als Beton bezeichnet. Beton enthält Zuschlagstoffe mit einem Durchmesser von 3 mm und größer bis zu 64 mm. Mörtel enthalten Zuschlagstoffe, auch Füllstoffe genannt, mit einem Durchmesser von 0,005 bis 5 mm, insbesondere von 0.01 bis 3 mm. Sie können als Trockenmörtel, pastöse Mörtel und Mörtel mit zwei oder mehr Komponenten vorliegen. Oft sind Trockenmörtel bevorzugt, insbesondere wenn alle Komponenten in fester Form, vorzugsweise als Pulver, vorliegen. Dann können die Trockenmörtel werkseitig vorgemischt werden, wobei dieser dann bauseitig nur noch mit Wasser vermischt und appliziert werden muss. Pastöse Mörtel sind dann bevorzugt, wenn keine hydraulischen Bindemittel anwesend sind und wenn vollständig vorgemischte Systeme gewünscht sind, welche auch den benötigten Wasseranteil schon enthalten. Unter Mörteln mit zwei oder mehr Komponenten werden Systeme verstanden, die einerseits aus einer festen Komponente, die beispielsweise alle pulverförmigen Komponenten enthält, und einer oder mehreren flüssigen und/oder zähflüssigen Komponente bestehen. Die flüssige Komponente enthält in der Regel die wässrige Phase enthaltend die flüssigen Rezepturkomponenten.

So genannte Zuschlagstoffe in einer erfindungsgemäßen Mischung können beispielsweise Gesteinskörnungen nach EN 206-1:2000 sein. Insbesondere können Zuschlagstoffe Aggregate, Sande, Kiese, Splitte, Porphyr, Quarzmehl, Kalkmehl und Gesteinsmehl oder Mischungen davon, aber auch Flugaschen, Mikrosilica und sonstige silikatische Zusatzstoffe oder Mischungen davon sein. Dabei können Sande beispielsweise Quarzsande oder Flusssande sein. Bevorzugt sind Kiese, Splitte, Brechsande, Porphyr, Quarzmehl, Kalkmehl und Gesteinsmehl oder Mischungen davon. So kann eine erfindungsgemäße Mischung vorteilhaft Zuschläge enthalten, die bevorzugt ein Größtkorn von 8 bis 63 mm enthalten, besonders bevorzugt von 8 mm, 16 mm, 32 mm oder 63 mm, insbesondere Zuschläge mit einem Größtkorn von 32 mm, gemäß den Vorgaben der DIN 1045-2. Besonders bevorzugt ist, wenn der oder die Zuschlagstoffe ein Aggregat mit 32 mm Größtkorn und/oder Sand mit 5 mm Größtkorn ist/sind.

Eine erfindungsgemäße Mischung kann man in der Regel in einfacher und wirtschaftlicher Weise durch das Zusammengeben und Mischen der anspruchsgemäßen Komponenten herstellen. Typischerweise kann man eine erfindungsgemäße Mischung mit Wasser versetzen und in einem Mischapparat mischen.

So kann man im Allgemeinen durch Mischen der Komponenten gemäß dem vorliegenden Hauptanspruch zunächst eine härtbare Mischung vorteilhaft bereitstellen. Dieser kann man, wenn man sie dann bei Applikation mit einer anspruchsgemäßen Menge an Wasser zusammengibt, gegebenenfalls unter guter Durchmischung mit bzw. in dem Fachmann an sich bekannten Geräten bzw. Behältern, weitere Komponenten, die bereits oben aufgezählt sind, zusetzen und die so erhaltene Mischung oder Zusammensetzung bzw. eine so hergestellte Masse in eine gewünschte Form bringen und hydraulisch abbinden bzw. erhärten lassen.

Das mineralische Bindemittel umfasst bevorzugt mindestens a) ein hydraulisch abbindendes Bindemittel, insbesondere Zement, b) ein latent hydraulisches Bindemittel, insbesondere saure Hochofenschlacke, Puzzolane und/ oder Metakaolin, und/oder c) ein nicht-hydraulisches Bindemittel, welches unter Einfluss von Luft und Wasser reagiert, insbesondere Calciumhydroxid und/ oder Calciumoxid, enthält.

Als hydraulisch abbindendes Bindemittel a) ist Zement, insbesondere Portlandzement, Portlandkompositzement, Hochofenzement, Calciumsulfoaluminatzement, Puzzolanzement, d. h. Zement mit Anteilen an Puzzolanen, Kompositzement, beispielsweise nach EN 196 CEM I, II, III, IV und V, und/oder Tonerdeschmelzzement, auch Aluminatzement genannt, bevorzugt.

Als latent hydraulische Bindemittel b) können Puzzolane, wie Metakaolin, Calciummetasilikat und/oder vulkanische Schlacke, vulkanischer Tuff, Trass, Flugasche, Hochofenschlacke, luftgekühlte Schlacke, gebrannter Schiefer, Diatomeenerde, Moler, Reisschalenasche, pyrogene Kieselsäure, Mikrosilica und/oder Silikastaub eingesetzt werden, welche zusammen mit einer Calciumquelle, wie Calciumhydroxid und/oder Zement, hydraulisch reagieren.

Als nicht-hydraulisches Bindemittel c), welches unter Einfluss von Luft und Wasser reagiert, kann insbesondere Calciumsulfat in Form von alpha- und/oder beta-Halbhydrat und/oder Anhydrit sowie Kalk, meist in der Form von Calciumhydroxid und/oder Calciumoxid, eingesetzt werden.

Als mineralisches Bindemittel bevorzugt ist mindestens ein hydraulisch abbindendes Bindemittel ausgewählt aus der Reihe der Zemente, der Portland-Zemente, der Kompositzemente, der Zemente mit Anteilen an Puzzolanen und der Hochofenzemente und insbesondere rein Portlandzement-basierte Systeme oder eine Mischung aus Portlandzement, Tonerdeschmelzzement und Calciumsulfat, wobei bei beiden Systemen gegebenenfalls noch latent hydraulische und/oder nicht-hydraulische Bindemittel zugesetzt werden können.

Bevorzugte mineralische Bindemittel sind hydraulisch abbindende Bindemittel, wobei Zement, insbesondere Portlandzement, Kompositzement, Hochofenzement und Calciumsulfoaluminatzement, ganz besonders bevorzugt ist.

In einer bevorzugten Ausführungsform der vorliegenden Erfindung werden als Silicium-Verbindung nur fluororganylsubstituierte Silicium-Verbindungen eingesetzt. In einer anderen bevorzugten Ausführungsform werden fluororganylsubstituierte Silicium-Verbindungen zusammen mit nicht substituierten oder mit Silicium-Verbindungen, die nicht Fluor, sondern einen oder mehrere andere Substituenten als Fluor besitzen, verwendet. Nicht-limitierende Beispiele sind Aminoalkylalkoxysilane oder Alkylalkoxysilane, beispielsweise Octyltriethoxysilan. Dabei kann jedes Mischungsverhältnis eingestellt werden, wobei zu bemerken ist, dass die gewünschten "easy-to-clean"-Eigenschaften erst mit einer der Rezeptur und Anwendung angepassten Menge an fluororganylsubstituierten Silicium-Verbindungen erzielt wird.

Erfindungsgemäße fluororganylsubstituierten Silicium-Verbindungen können (i) Verbindungen sein, die aus den allgemeinen Formeln I, II, III, IV und/oder V abgeleitet sind und können vernetzende Strukturelemente aufweisen, die kettenförmige, cyclische, vernetzte und/oder raumvernetzte Strukturen bilden, wobei mindestens eine Struktur in idealisierter Form der allgemeinen Formel entspricht,

(HO)[(HO)₁₋ₓ(R²)ₓSi(A)O]ₐ[Si(B)(R³)_{y}(OH)_{1-y}O]_{b}[Si(C)(R⁵)ᵤ(OH)₁₋ᵤO]_{c} [Si(D)(OH)O]_{d}H (HX)ₑ (I),

wobei in Formel I die Strukturelemente aus Alkoxysilan der allgemeinen Formeln II, III, IV und/oder V abgeleitet sind und
- A einem Aminoalkylrest H₂N(CH₂)_{f}(NH)_{g}(CH₂)ₕ(NH)ₘ(R⁷)ₙ- in dem Strukturelement, abgeleitet aus der allgemeinen Formel II entspricht,

   H₂N(CH₂)_{f}(NH)_{g}(CH₂)ₕ(NH)ₘ(R⁷)ₙSi(OR¹)₃₋ₓ(R²)ₓ (II),

   wobei f eine ganze Zahl zwischen 0 und 6 ist, MIT g=0 falls f=0 und g=1 falls f>0, h eine ganze Zahl zwischen 0 und 6, x=0 oder 1, m=0 oder 1 und n=0 oder 1, mit n+m=0 oder 2 in Formel II ist, und R⁷ eine lineare, verzweigte oder cyclische bivalente Alkyl-Gruppe mit 1 bis 16 C-Atomen ist,
- B einem Fluoralkylrest R⁴-Y-(CH₂)ₖ- in dem Strukturelement, abgeleitet aus der allgemeinen Formel III entspricht,

   R⁴-Y-(CH₂)ₖSi(R³)_{y}(OR¹)_{3-y} (III),

   wobei R⁴ eine mono-, oligo- oder perfluorierte Alkyl-Gruppe mit 1 bis 9 C-Atomen oder eine mono-, oligo- oder perfluorierte Aryl-Gruppe, Y eine CH₂-, O- oder S-Gruppe, R³ eine lineare, verzweigte oder cyclische Alkyl-Gruppe mit 1 bis 8 C-Atomen oder eine Aryl-Gruppe bedeuten, k=0, 1 oder 2 und y=0 oder 1 in Formel III und/oder VI ist, vorzugsweise ist R⁴ = F₃C(CF₂)ᵣ-, mit r=0 bis 18, vorzugsweise r=5, mit Y eine CH₂- oder O-Gruppe, und vorzugsweise k=1 mit Y = -CH₂-,
- C einem Alkylrest R⁵- in dem Strukturelement, abgeleitet aus der allgemeinen Formel IV entspricht,

   R⁶-Si(R⁵)ᵤ(OR¹)₃₋ᵤ (IV),

   wobei R⁵ eine lineare oder verzweigte Alkyl-Gruppe MIT 1 bis 4 C-Atomen, insbesondere Methyl und u=0 oder 1 in Formel IV ist,
- D einem Alkylrest R⁶- in dem Strukturelement, abgeleitet aus der allgemeinen Formel IV entspricht,

   R⁶-Si(OR¹)₃ (V),

   worin R⁶ in den vorgenannten Formeln eine lineare, verzweigte oder cyclische Alkyl-Gruppe mit 1 bis 8 C-Atomen bedeutet, und
   R¹ in den Formeln II, III, IV, V und/oder VI unabhängig von einander eine lineare, verzweigte oder cyclische Alkyl-Gruppe mit 1 bis 8 C-Atomen oder ein Aryl-Gruppe bedeutet, vorzugsweise ist R¹ unabhängig Methyl, Ethyl oder Propyl; mit R², R³ und/oder R⁵ in den vorgenannten Formeln unabhängig einem linearen oder verzweigten Alkylrest mit 1 bis 4 C-Atomen entsprechen, vorzugsweise unabhängig voneinander Methyl oder Ethyl, und
- in Formel (I) HX eine Säure darstellt, wobei X ein anorganischer oder organischer Säurerest ist, mit x, y und u unabhängig voneinander gleich 0 oder 1 und a, b, c, d und e unabhängig voneinander ganzzahlig sind mit a≥0, b≥0, c≥0, d≥0, e≥0 und (a+b+c+d)≥2, vorzugsweise (a+b+c+d)≥4, besonders vorzugsweise (a+b+c+d)≥10 liegt, mit X beispielsweise Chlorid, Nitrat, Formiat oder Acetat umfasst,
oder (ii) Verbindungen sein, worin die Organosiloxane Co-Kondensate oder Block-Co-Kondensate oder Gemische dieser abgeleitet aus mindestens zwei der zuvor genannten Alkoxysilane der allgemeinen Formeln II, III, IV und V sind,
vorzugsweise im molaren Verhältnis aus den Formeln II und III 1:≤ 3,5 abgeleitet oder auch mit a, b, c und d im Mol der Alkoxysilane der Formeln II, III, IV und V mit einem molaren Verhältnis von 0,1 ≤ [a/b+c+d], insbesondere 0,25 ≤ [a/b+c+d] ≤ 6000, vorzugsweise 1 ≤ [a/b+c+d] ≤ 3 mit a > 0, b > 0, c ≥ 0 und d ≥ 0,
oder (iii) monomere fluororganylsubstituierten Silicium-Verbindungen der allgemeinen Formel VI

R₄-Y-(CH₂)ₖSi(R³)_{y}(OR¹)_{3-y} (VI),

wobei R⁴, Y, R¹, R³, k und y die oben angegebene Bedeutung haben, und/oder Mischungen mehrerer monomerer Verbindungen der allgemeinen Formel VI, sein.

Bevorzugt werden härtbare Mischungen, wobei die fluororganylsubstituierte Silicium-Verbindung ausgewählt ist aus der Reihe fluororganylsubstituierter Silane und fluororganylsubstituierter Siloxane und fluororganylsubstituierter Silicone oder Mischung davon, insbesondere wobei Silicium-Verbindungen aus der Reihe der fluoralkylsubstituierten Siloxane oder monomeren fluoralkylsubstituierten Silane, insbesondere der fluoralkylsubstituierten und Alkoxy- bzw. Hydroxy-Gruppen tragenden Siloxane oder monomeren fluoralkylsubstituierten Alkoxysilane, oder Mischungen davon ganz besonders bevorzugt ausgewählt sind. In einer bevorzugten Ausführungsform enthält die erfindungsgemäße Mischung als fluororganylsubstituierte Silicium-Verbindung ein Fluoralkylalkoxysilan der Formel (VII)

F₃C(CF₂)ₓ(C₂H₄)_{y}Si(CH₃)_{z}(OR)_{3-z} (VII),

wobei jedes R unabhängig voneinander aus der Gruppe bestehend aus Methyl, Ethyl, n-Propyl und i-Propyl ausgewählt ist, x eine ganze Zahl mit einem Wert von 0 bis 16, y = 0 oder 1, und z = 0 oder 1, vorzugsweise y = 1, und ganz besonders bevorzugt y = 1, z = 0 und x = 4, 6, 8 oder 10, ist.

Bevorzugte, aber nicht limitierende Beispiele von Fluoralkylalkoxysilan der Formel (VII) sind Tridecafluor-1,1,2,2-tetrahydrooctyltriethoxysilan und/ oder Tridecafluor-1,1,2,2-tetrahydrooctyltrimethoxysilan.

Die erfindungsgemäß verwendeten fluororganylsubstituierten Silicium-Verbindungen sind in aller Regel wasserunlöslich, d. h. weniger als 0,1 Gew.-%, bevorzugt weniger als 0,01 Gew.-%, der Silicium-Verbindung löst sich bei 20°C und pH 5 in Wasser und bevorzugt ausgewählt aus der Reihe der fluororganylsubstituierten Silane und fluororganylsubstituierten Siloxane oder Mischungen davon. Insbesondere sind sie bevorzugt ausgewählt aus der Reihe der fluoralkylsubstituierten, monomeren Silane und fluoralkylsubstituierten Siloxane oder Mischungen davon. Ein Beispiel für ein fluoralkylsubstituiertes Silan ist das 3,3,4,4,5,5,6,6,7,7,8,8,8-Tridecafluoroctyl-triethoxysilan.

Speziell bevorzugte fluororganylsubstituierte Silicium-Verbindungen werden aus der Reihe der fluororganylsubstituierter Silane und fluororganylsubstituierter Siloxane, insbesondere fluoralkylsubstituierte Monosilane und -siloxane, oder Mischungen davon, ausgewählt. Unter Mischungen werden u. a. auch Mischungen aus fluororganylsubstituierten Silicium-Verbindungen mit anderen, nicht fluorsubstituierten Silicium-Verbindungen verstanden, insbesondere Mischungen aus fluororganylsubstituierten Silicium-Verbindungen gemäß Formel (VII) und C₁-C₁₆-Alkylalkoxysilanen, wobei als Alkoxy-Gruppen Methoxy-, Ethoxy- und Propoxy-Gruppen sowie als Alkyl-Gruppen Methyl-, Ethyl-, Propyl-, Butyl-, Pentyl-, Hexyl-, Heptyl-, Octyl- und Hexadecyl-Gruppen bevorzugt sind. Werden Mischungen mit nicht fluorsubstituierten Silicium-Verbindungen eingesetzt, beträgt der Anteil der fluororganylsubstituierter Silicium-Verbindungen bevorzugt mindestens 25 Gew.-%, insbesondere mindestens 50 Gew.-%, und ganz besonders bevorzugt mindestens 75 Gew.-%, bezogen auf die Gesamtmenge der eingesetzten Silicium-Verbindung.

Die fluororganylsubstituierten Silicium-Verbindungen, die im Pulver, im Zwischenprodukt und/oder in der durch Redispergierung erhaltenen Emulsion enthalten sind, können mittels Extraktion mit einem geeigneten Lösungsmittel, beispielsweise mit Methylenchlorid (CH₂Cl₂), aus dem Pulver, dem Zwischenprodukt respektive der Emulsion getrennt und deren Menge quantitativ bestimmt werden. Die erhaltene Lösung kann anschließend mittels GC/MS und/oder mittels NMR untersucht werden, wobei so auch der Anteil an hydrolysierten Alkoxy-Gruppen bestimmt werden kann. Zur NMR Spektroskopie eignen sich insbesondere ²⁹Si- sowie ¹⁹F-NMR. Gegebenenfalls können auch ¹H- und/ oder ¹³C-NMR Spektroskopie angewandt werden. Diese Methoden sind dem Fachmann bekannt.

Befindet sich die fluororganylsubstituierte Silicium-Verbindung in der ausgehärteten Mischung, kann sie beispielsweise unter Verwendung des in EP 0 741 293 A2 beschriebenen Verfahrens analysiert werden.

Geeignete in Wasser lösliche Polymere sind bevorzugt höhermolekulare Verbindungen, d. h. Polymere mit 20 oder mehr Monomer Einheiten. Diese Polymere liegen bei Raumtemperatur in der Regel als Feststoff vor.

Die wasserlöslichen Polymere werden ausgewählt aus der Reihe der Polysaccharide, Polysaccharidether, Proteine, Vinyl-Polymerisate, Formaldehyd-Kondensate und Alkylenoxid-Polymerisate.

Die eingesetzten wasserlöslichen Polymere sind Biopolymere wie Proteine und Polysaccharide, welche gegebenenfalls chemisch modifiziert sind, synthetische höhermolekulare Oligomere, d. h. Oligomere von 4 bis 19 oder mehr Monomer Einheiten, sowie non-ionische (nicht-ionische) oder schwach ionische Polymerisate. Es kann nur ein Polymer oder ein Polymergemisch verwendet werden. Oft ist es vorteilhaft, wenn das Polymer nur einen geringen Anteil an Carboxyl-Gruppen aufweist oder ganz non-ionisch ist.

Einsetzbare Biopolymere sind Polysaccharide und Polysaccharidether. Es können auch synthetische Polysaccharide, wie anionische, non-ionische oder kationische Heteropolysaccharide, insbesondere Xanthan Gum oder Wellan Gum, verwendet werden. Die Polysaccharide können, müssen aber nicht, chemisch modifiziert sein, beispielsweise mit Carboxymethyl-, Carboxyethyl-, Hydroxyethyl-, Hydroxypropyl-, Methyl-, Ethyl-, Propyl-, Sulfat-, Phosphat- und/oder langkettigen Alkyl-Gruppen. Weitere natürliche Stabilisierungssysteme sind Proteine wie beispielsweise Gelatine, Casein und/oder Soja-Protein.

Ebenfalls einsetzbar sind synthetisch hergestellte in Wasser lösliche Polymere, manchmal auch unter dem Begriff Schutzkolloide bekannt, wie Vinyl-Polymerisate. Formaldehyd-Kondensate und Alkylenoxid-Polymerisate. Sie können allein oder in Kombination mit anderen synthetischen und/oder natürlichen Polymeren eingesetzt werden.

Nicht-limitierende Beispiele von Vinyl-Polymerisaten sind ein oder mehrere Polyvinylpyrrolidone und/ oder Polyvinylacetale mit gewichtsmittleren Molekulargewichten Mw von 2000 bis 400'000, voll- oder teilverseifte und/ oder mit Amino-Gruppen, Carbonsäure-Gruppen und/ oder Alkyl-Gruppen modifizierte Polyvinylalkohole mit einem Hydrolysegrad von bevorzugt etwa 70 bis 100 Mol-%, insbesondere von etwa 80 bis 98 Mol-%, und einer Höpplerviskosität in 4%iger wässriger Lösung von bevorzugt 1 bis 50 mPa s, insbesondere von etwa 3 bis 40 mPa s (gemessen bei 20 °C nach DIN 53015), Styrol-Maleinsäure- und/oder Vinylether-Maleinsäure-Copolymerisate. Nicht-limitierende Beispiele von Formaldehyd-Kondensaten sind Melaminformaldehydsulfonate und Naphthalinformaldehydsulfonate. Nicht-limitierende Beispiele von Alkylenoxid-Polymerisaten sind Homopolymerisate von Propylenoxid und Ethylenoxid wie auch deren Blockcopolymerisate.

Ganz besonders bevorzugt sind synthetische Stabilisierungssysteme, insbesondere teilverseifte, gegebenenfalls modifizierte, Polyvinylalkohole, wobei ein oder mehrere Polyvinylalkohole zusammen eingesetzt werden können, gegebenenfalls mit geringen Mengen von geeigneten Emulgatoren. Bevorzugte synthetische Stabilisierungssysteme sind insbesondere modifizierte und/oder unmodifizierte Polyvinylalkohole mit einem Hydrolysegrad von 80 bis 98 Mol-% und einer Höpplerviskosität als 4%ige wässrige Lösung von 1 bis 50 mPa s und/oder Polyvinylpyrrolidon.

Es ist auch möglich, dass bei einer erfindungsgemäßen Mischung mehrere in Wasser lösliche Polymere eingesetzt werden, gegebenenfalls in Kombination mit einem oder mehreren Emulgatoren. Geeignete Emulgatoren sind dem Fachmann bekannt. Beispielsweise kann eine Kombination von einer oder mehreren natürlichen Verbindungen mit einer oder mehreren synthetisch hergestellten Verbindungen oder eine Kombination von einer oder mehreren natürlichen oder synthetisch hergestellten Verbindungen verwendet werden.

Dazu werden beispielsweise geeignete Emulsionen und/oder Dispersionen durch Trocknung in das erfindungsgemäße in Wasser redispergierbare Pulver überführt. Der Begriff Pulver steht im Sinne dieser Erfindung stellvertretend auch für Granulat und Flocken. Die erfindungsgemäßen Pulver sind bevorzugt rieselfähig und sie redispergieren in Wasser. Dies erfolgt spontan oder durch leichtes Umrühren, wobei die ursprüngliche Partikel- oder Tröpfchengröße, zumindest annähernd, wieder erreicht wird. Die Emulsion, Dispersion wie auch die Redispersion sind in Wasser stabil, d.h. auch nach Wochen oder sogar nach Monaten erfolgt in der Regel kein Aufbrechen oder Absetzen resp. Sedimentieren der Partikel.

Es wird angemerkt, dass in EP-A-1 982 964 die Verwendung einer Mischung von einem in Wasser löslichen Polymeren und einer Organosiliciumverbindung für den Schutz von Substraten vor Korrosion beschrieben ist. Als Organosiliciumverbindung kann eine Vielzahl von Silanen, Siloxanen und Gemische verschiedener Organosiliciumverbindungen eingesetzt werden. Unter anderem wird auch erwähnt, dass Fluoralkyl-funktionelle Alkoxysilane verwendet werden können. Zudem werden in Wasser dispergierbare und redispergierbare Mischungen enthaltend wasserlösliche Polymere und mindestens eine Organosiliciumverbindung, basierend auf einer Si-O-Si Verbindung oder auf einem spezifischen Oligomerengemisch von Alkylalkoxysiloxanen, beschrieben. Die Verwendung solcher Mischungen für "easy-to-clean"-Anwendungen wird nicht genannt noch nahegelegt. Zudem eignen sich insbesondere die in den Beispielen beschriebenen Ausführungsformen nicht um Schmutz abweisende Werkstoffe zu erhalten.

In einer bevorzugten - nicht beanspruchten - Ausführungsform wird zunächst ein Zwischenprodukt in Form einer wässrigen Dispersion der fluororganylsubstituierten Silicium-Verbindung hergestellt, wobei als Dispergiermittel in Wasser lösliche Polymere, insbesondere synthetische Polymere wie beispielsweise Polyvinylalkohol, eingesetzt werden. Hierzu wird bevorzugt das wasserlösliche Polymer in Wasser vorgängig gelöst und anschließend mit der fluororganylsubstituierte Silicium-Verbindung vermischt, beispielsweise durch Dispergierung, wobei gegebenenfalls noch weitere Additive, auch Hilfsmittel genannt, zugegeben werden können. Solche Methoden sind dem Fachmann bekannt. Das Zwischenprodukt kann anschließend getrocknet werden, wobei vor, während und/oder nach der Trocknung gegebenenfalls noch weitere Zusätze, wie beispielsweise Füllstoffe, zugemischt werden können. Dadurch werden frei fließende, und somit gut rieselfähige, in Wasser redispergierbare Pulver, also erfindungsgemäße Pulver, erhalten, welche sich durch eine hervorragende Benetzbarkeit und Redispergierbarkeit in Wasser auszeichnen. Die somit verkapselte fluororganylsubstituierte Silicium-Verbindung besitzt so im Zwischenprodukt wie auch im Pulver eine exzellente Lagerstabilität. Trotzdem hydrolysiert die fluororganylsubstituierte Silicium-Verbindung in alkalischem Milieu, bevorzugt beim Aushärten des mineralischer Bindemittels, schnell genug, um die vorteilhaften "easy-to-clean"-Eigenschaften zu erhalten.

Die Begriffe Emulsion und Dispersion wie auch emulgieren und dispergieren, werden im Rahmen dieser Erfindung auch als Synonyme verwendet.

Der Anteil der fluororganylsubstituierter Silicium-Verbindung im erfindungsgemäß verwendeten Pulver beträgt in der Regel etwa 2,5 Gew.-% bis 90 Gew.-%, bevorzugt etwa 5 Gew.-% bis 80 Gew.-%, besonders bevorzugt etwa 5 Gew.-% bis 70 Gew.-%, insbesondere etwa 10 Gew.-% bis 60 Gew.-%, bezogen auf das Pulver.

Die Trocknung erfolgt bevorzugt mittels Sprühtrocknung, Gefriertrocknung, Fliessbetttrocknung, Walzentrocknung, Granulation oder Schnelltrocknung, wobei die Sprühtrocknung besonders bevorzugt ist. Die Versprühung erfolgt beispielsweise mittels Sprührad, Ein- oder Mehrstoff-Düse. Während und/oder nach der Trocknung können weitere Hilfsmittel wie Antiblockmittel und/ oder Füllstoffe zugegeben werden. Nicht-limitierende Beispiele sind Aluminiumsilicate, kolloidales Siliciumdioxidgel, pyrogen erzeugtes Siliciumdioxid, gemahlene Tone, Perlite, Vermiculite, Leichtspat, Talkum, Zemente, Kreidepulver, Calcium/Magnesium-Mischcarbonate und/oder Diatomeenerde.

Falls notwendig, kann die wässrige Dispersion, d. h. das Zwischenprodukt, dazu noch mit Wasser verdünnt werden, um eine für die Trocknung geeignete Viskosität zu erhalten. Die Trocknungstemperatur soll in der Regel aus sicherheitstechnischen Überlegungen etwa 250 °C, insbesondere etwa 200 °C, nicht übersteigen. Um eine genügend effiziente Trocknung zu erzielen, sind Temperaturen von etwa 110 °C oder höher, insbesondere etwa 120 °C oder höher bevorzugt. Die Austrittstemperatur des Gasstromes beträgt in der Regel etwa 40 °C bis 100 °C, insbesondere etwa 50 °C bis 90 °C.

In einer bevorzugten Ausführungsform enthält das erfindungsgemäße Pulver als fluororganylsubstituierte Silicium-Verbindung das Fluoralkylalkoxysilan der Formel (VII)

F₃C(CF₂)ₓ(C₂H₄)_{y}Si(CH₃)_{z}(OR)_{3-z} (VII),

wobei jedes R unabhängig voneinander aus der Gruppe bestehend aus Methyl, Ethyl, n-Propyl und i-Propyl ausgewählt ist, x eine ganze Zahl mit einem Wert von 0 bis 16, y = 0 oder 1, und z = 0 oder 1, vorzugsweise y = 1, und ganz besonders bevorzugt y = 1, z = 0 und x = 4, 6, 8 oder 10, ist.

Für diese Ausführungsform bevorzugte, aber nicht limitierende Beispiele von Fluoralkylalkoxysilan der Formel (VII) sind Tridecafluor-1,1,2,2-tetrahydrooctyl-triethoxysilan und/ oder Tridecafluor-1,1,2,2-tetrahydrooctyltrimethoxysilan.

Wird die fluororganylsubstituierte Silicium-Verbindung in bekannter Weise mittels wasserlöslichen Polymeren in einer Flüssigkeit dispergiert, kann das Gewichtsverhältnis der jeweils eingesetzten Silicium-Verbindung zum wasserlöslichen Polymeren beispielsweise von etwa 95 : 5 bis 5 : 95, bevorzugt von etwa 85 : 15 bis 15 : 85, insbesondere von etwa 70 : 30 bis 30 : 70, und ganz besonders bevorzugt von etwa 60 : 40 bis 40 : 60 betragen.

Besonders bevorzugt ist es, wenn sie in rieselfähiger, pulverförmiger Form vorliegen und in Wasser dispergierbar sind. Es hat sich gezeigt, dass die Substanzen dann besonders gut und homogen in der erfindungsgemäßen Mischung eingearbeitet werden können.

Im Rahmen dieser Erfindung wird unter rieselfähig verstanden, dass solche Materialien frei fließend sind. Die Rieselfähigkeit kann mit dem Rieselfähigkeitsprüfgerät nach Dr. Pfrengle (z. B. von Karg-Industrietechnik angeboten) in Übereinstimmung mit ISO 4342 gemessen werden. So wird eine bestimmte Menge Pulver durch eine definierte Öffnung auf eine leicht raue Oberfläche gestreut. Durch Messen der Höhe des erhaltenen Kegels kann der Schüttwinkel anhand einer Referenztabelle bestimmt werden. Je niedriger der Schüttwinkel, desto besser die Rieselfähigkeit. Für rieselfähige Pulver wird ein Schüttwinkel von zwischen 5° und 70°, insbesondere zwischen 5° und 60° bevorzugt.

Erfindungsgemäß ist die fluororganylsubstituierte Silicium-Verbindung in einem wasserlöslichen Polymer eingekapselt, wobei das wasserlösliche Polymer und die Silicium-Verbindung Partikel bilden, die in Wasser dispergierbar und/ oder redispergierbar sind. Das wasserlösliche Polymer wird ausgewählt aus der Reihe der Polysaccharide, Polysaccharidether, Proteine, Vinyl-Polymerisate, Formaldehyd-Kondensate und Alkylenoxid-Polymerisate.

In einem erfindungsgemäß verwendeten Pulver sowie in einer entsprechenden erfindungsgemäßen härtbaren (Trocken-)Mischung kann die fluororganylalkoxysubstituierte Silicium-Verbindung, die bevorzugt bei Raumtemperatur in flüssiger Form vorliegt und die in einem wasserlöslichen Polymer eingekapselt ist und dabei in Form von Tröpfchen vorliegen kann, eine durchschnittliche Tröpfchengröße bis 10 µm, vorzugsweise von 10 nm bis 10 µm, besonders vorzugsweise von 20 nm bis 5 µm, insbesondere von 50 nm bis 2 µm, aufweisen. Zudem ist die fluororganylalkoxysubstituierte Silicium-Verbindung im Wesentlichen nicht hydrolysiert, d.h. weniger als 10 %, insbesondere weniger als 5 % der am Silicium gebundenen Alkoxy-Gruppen sind hydrolysiert. Die Tröpfchengröße im Pulver kann mittels Mikroskopie, bevorzugt mittels Elektronenmikroskopie, bestimmt werden und wird als mittlerer Durchmesser angegeben.

Die mittlere Partikelgröße des erfindungsgemäßen Pulvers beträgt -je nach Trocknungsmethode - typischerweise etwa von etwa 20 µm bis etwa 5 mm, insbesondere von etwa 50 µm bis etwa 2 mm. Wird das erfindungsgemäße Pulver mittels Sprühtrocknung hergestellt, beträgt die Partikelgröße in der Regel nicht mehr als 500 µm, bevorzugt nicht mehr als 300 µm. Die erhaltenen Pulver redispergieren in Wasser in der Regel spontan oder durch leichtes Umrühren, wobei sich vorteilhafterweise wieder die ursprüngliche Partikelgröße einstellt.

Die Bestimmung der Partikel-, Teilchen- und/ oder Tröpfchengröße kann mit den üblichen Meßmethoden durchgeführt werden, wobei die Lichtbeugung sowohl für Dispersionen wie auch für Pulver besonders bevorzugt ist. Diese Methoden sind dem Fachmann bekannt. Die Partikelgröße wird als Volumenmittel angegeben.

In einer bevorzugten - nicht beanspruchten - Ausführungsform liegt die erfindungsgemäß eingesetzte Silicium-Verbindun im Wesentlichen in nicht hydrolysierter Form vor. Die Hydrolyse der fluororganylalkoxy-substituierten Silicium-Verbindung erfolgt bei erfindungsgemäßer Anwendung insbesondere bei einem alkalischen pH Wert, beispielsweise nach Vermischen einer zementären Mischung mit Wasser. Eine erfindungsgemäße Mischung kann übliche Zusatzstoffe, insbesondere wie Zuschlagstoffe, wie sie bereits vorstehend in der Beschreibung, und insbesondere die nachfolgend genannten Zuschlagstoffe enthalten, oder Füllstoffe sowie Hilfsmittel, auch Hilfsstoffe genannt, enthalten.

So genannte Zuschlagstoffe in einer erfindungsgemäßen Mischung können beispielsweise Gesteinskörnungen nach EN 206-1:2000 sein. Insbesondere können Zuschlagstoffe Aggregate, Sande, Kiese, Splitte, Porphyr, Quarzmehl, Kalkmehl und Gesteinsmehl oder Mischungen davon, aber auch Flugaschen, Mikrosilica und sonstige silikatische Zusatzstoffe oder Mischungen davon sein. Dabei können Sande beispielsweise Quarzsande oder Flusssande sein. Bevorzugt sind Kiese, Splitte, Brechsande, Porphyr, Quarzmehl, Kalkmehl und Gesteinsmehl oder Mischungen davon. So kann eine erfindungsgemäße Mischung vorteilhaft Zuschläge enthalten, die bevorzugt ein Größtkorn von 8 bis 63 mm enthalten, besonders bevorzugt von 8 mm, 16 mm, 32 mm oder 63 mm, insbesondere Zuschläge mit einem Größtkorn von 32 mm, gemäß den Vorgaben der DIN 1045-2. Besonders bevorzugt ist, wenn der oder die Zuschlagstoffe ein Aggregat mit 32 mm Größtkorn und/oder Sand mit 5 mm Größtkorn ist/sind.

Geeignete Hilfsstoffe sind ausgewählt aus anorganischen oder organischen Säuren, Puffersubstanzen, Fungiziden, Bakteriziden, Algiziden, Mikrobioziden, Geruchsstoffen, Korrosionsinhibitoren, wie Alkylammoniumbenzoate, Aminoalkohole, Glukonsäure und/oder deren Alkali- und Erdalkalisalze, Konservierungsmittel, Rheologiehilfsmittel, Hydrophobierungsmittel, wie Fettsäuren sowie deren Salze und Ester, Fettalkohole, Silane, Luftporenbildner, Netzmittel, Entschäumer, Emulgatoren, Filmbildehilfsmittel, Abbinde- und Erstarrungsbeschleuniger, Abbindeverzögerer, Verdickungsmittel, Dispergiermittel, Rheologiesteuerungsadditive, wie Zementverflüssiger, Polycarboxylate, Polycarboxylatether, Polyacrylamide und/ oder Verdicker, Wasserretentionsmittel, Cellulosefasern und Celluloseether, Stärkeether, Guarether, Additive zur Reduktion von Ausblühungen, der Sedimentation, und/ oder des Ausschwemmens, Schwundreduktionshilfsmittel, Pigmente, und, wenn die Mischung pulverförmig ist, Hilfsstoffe zur Reduktion der Pulververblockung, enthalten.

Weitere geeignete Zusatzstoffe, insbesondere Füllstoffe, sind beispielsweise, aber nicht ausschließlich, quarzitische und/oder carbonatische Sande und/oder Mehle wie beispielsweise Quarzsand und/oder Kalksteinmehl, Carbonate, Silikate, Schichtsilikate, gefällte Kieselsäuren, Leichtfüllstoffe wie Mirohohlkugeln aus Glas oder Polymere wie Polystyrolkugeln, Alumosilikate, Siliciumoxid, Aluminium-Siliciumoxid, Calcium-Silikathydrat, Siliciumdioxid, Aluminium-Silikat, Magnesium-Silikat, Aluminium-Silikathydrat, Calcium-Aluminium-Silikat, Calcium-Silikathydrat, Aluminium-Eisen-Magnesium-Silikat, Calcium-metasilikat und/oder vulkanische Schlacke, Puzzolane wie Metakaolin, latenthydraulische Komponenten, silikatische Zusatzstoffe wie beispielsweise Mikrosilica, Flugasche, Flammkieselsäuren, Fällungskieselsäuren, Zeolithe, kristallinen Kieselsäuren, Kieselsole, Kaolin, Mica, Kieselgur, Diatomeenerde, Talkum, Wollastonit oder Clay oder aus einem Gemisch aus entsprechenden Mikrosilica, Flugasche, Flammkieselsäuren, Fällungskieselsäuren, Zeolithe, kristallinen Kieselsäuren, Kieselsole, Kaolin, Mica, Kieselgur, Diatomeenerde, Talkum, Wollastonit oder Clay, oder aus einer wässrigen Dispersion mindestens einer pyrogen hergestellten Kieselsäure oder mindestens einer gefällten Kieselsäure oder eines Gemisches aus pyrogen hergestellten sowie gefällten Kieselsäuren.

Wird die erfindungsgemäß eingesetzte fluororganylsubstituierte Silicium-Verbindung als als Redispersion eingesetzt, so wird vorteilhaft für die Berechnung der gesamten Mischung der zementgebundenen Mischung nur der Anteil an Aktivstoff in der jeweiligen wässrigen Mischung als erfindungsgemäße fluororganylsubstituierte Silicium-Verbindung berücksichtigt. Vorteilhaft wird der Wassergehalt dieser wässrigen Zubereitungen bei der Berechnung der nötigen Zugabemenge an Wasser berücksichtigt.

Die erfindungsgemäße Mischung besteht vorteilhafterweise aus a) 2 bis 60 Gew.-% mindestens einem hydraulischen Bindemittel, insbesondere Zement, b) 30 bis 90 Gew.-% mindestens eines Zuschlagstoffs, c) 0,001 bis 8 Gew.-% mindestens einer fluororganylsubstituierten Silicium-Verbindung und gegebenenfalls d) 0 bis 40 Gew.-% weiterer Komponenten, wobei die jeweils eingesetzten Komponenten in Summe 100 Gew.-% ergeben und die Komponente c) als Pulver oder als in Wasser redispergiertes Pulver vorliegt.

Die erfindungsgemäße härtbare Mischung umfasst insbesondere Beton und Mörtel.

Typischerweise ist noch Wasser in der erfindungsgemäßen härtenden Mischung enthalten oder wird dieser zugegeben, um die Aushärtung zu ermöglichen. Die Menge an Wasser beträgt dabei vorzugsweise 1 bis 50 Gew.-%. Für Beton werden bevorzugt 1 bis 20 Gew.-%, insbesondere 2 bis 18 Gew.-% Wasser, für Mörtel bevorzugt 15 bis 45 Gew.-%, insbesondere 17 bis 40 Gew.-% Wasser, bezogen auf die Mischung zugegeben, wobei die jeweils eingesetzten Komponenten, inklusive dem eingesetzten Wasser, in Summe 100 Gew.-% ergeben.

Eine erfindungsgemäße Mischung für Beton besteht bevorzugt aus
a₁) 6 bis 25 Gew.-%, vorzugsweise 10 bis 20 Gew.-%, insbesondere 12 bis 18 Gew.-%, mindestens einem hydraulischen Bindemittel, insbesondere Zement,
b₁) 50 bis 90 Gew.- %, vorzugsweise 65 bis 85 Gew.-%, insbesondere 70 bis 80 Gew.-%, mindestens eines Zuschlagstoffs,
c₁) 0,001 bis 8 Gew.-%, bevorzugt 0,003 bis 5 Gew.-%, vorzugsweise 0,005 bis 4 Gew.-%, insbesondere 0,01 bis 3 Gew.-%, ganz besonders bevorzugt 0,05 bis 2 Gew.-%, mindestens einer fluororganylsubstituierten Silicium-Verbindung, die in einem wasserlöslichen Polymer eingekapselt ist und in Form des Zwischenproduktes, des daraus erhaltenen Pulvers oder des in Wasser redispergierten Pulvers, vorliegt, und
gegebenenfalls 0 bis 40 Gew.-% weiterer Komponenten, wobei die jeweils eingesetzten Komponenten in Summe 100 Gew.-% ergeben.

Es ist vorgesehen, dass je nach konkreter Auswahl der Mischungsbestandteile in jedem Fall die unter a₁), b₁) und c₁) genannten allgemeinen Mengenbegrenzungen eingehalten werden.

Darüber hinaus kann eine erfindungsgemäße hydraulisch abbindende Mischung in Form einer Betonmischung vorteilhaft als weitere Komponenten zusätzlich d₁) 0,01 bis 2 Gew.-%, bevorzugt 0,05 bis 0,5 Gew.-%, Verflüssiger, und/oder e₁) 0,01 bis 10 Gew.-%, bevorzugt 0,01 bis 3 Gew.-%, insbesondere 0,01 bis 1 Gew.-%, mindestens eines weiteren Hilfsmittels umfassen wobei die jeweils eingesetzten Komponenten in Summe 100 Gew.-% ergeben.

Verflüssiger können alle gängigen Fliesshilfsmittel, insbesondere Polycarboxylatether (PCEs) und/oder Polymethylmethacrylate sowie Ligninsulfonate oder Naphthalin-Formaldehyd-Sulfonate, sein.

Erfindungsgemäße hydraulisch abbindende Mischungen können als weitere Hilfsmittel oder Hilfsstoffe beispielsweise Dispergierhilfsmittel und Netzhilfsmittel, wie beispielsweise Siliconate oder Alkylphosphonate, Entschäumer, wie beispielsweise Trialkylphosphate, Luftporenbildner, wie verseifte Harzsäuren, Verzögerer sowie Beschleuniger, wie beispielsweise Formiate, und/oder Wasserreduzierer, enthalten.

So genannte Zuschlagstoffe in einer erfindungsgemäßen Mischung können beispielsweise Gesteinskörnungen nach EN 206-1:2000 sein. Insbesondere können Zuschlagstoffe Aggregate, Sande, Kiese, Splitte, Porphyr, Quarzmehl, Kalkmehl und Gesteinsmehl oder Mischungen davon, aber auch Flugaschen, Mikrosilica und sonstige silikatische Zusatzstoffe oder Mischungen davon sein. Dabei können Sande beispielsweise Quarzsande oder Flusssande sein. Bevorzugt sind Kiese, Splitte, Brechsande, Porphyr, Quarzmehl, Kalkmehl und Gesteinsmehl oder Mischungen davon. So kann eine erfindungsgemäße Mischung vorteilhaft Zuschläge enthalten, die bevorzugt ein Größtkorn von 8 bis 63 mm enthalten, besonders bevorzugt von 8 mm, 16 mm, 32 mm oder 63 mm, insbesondere Zuschläge mit einem Größtkorn von 32 mm, gemäß den Vorgaben der DIN 1045-2. Besonders bevorzugt ist, wenn der oder die Zuschlagstoffe ein Aggregat mit 32 mm Größtkorn und/oder Sand mit 5 mm Größtkorn ist/sind.

Die Mischung für Mörtel hängt von der Art des Bindemittels, insbesondere von der Art des mineralischen Bindemittels, und von der Anwendung, für welche der Mörtel optimiert wird, ab. Solche Mischungen sind dem Fachmann bekannt. Eine Mischung für hydraulisch abbindende Mörtel, insbesondere Trockenmörtel, besteht bevorzugt aus
a₂) 10 bis 50 Gew.-%, vorzugsweise 15 bis 40 Gew.-%, mindestens einem hydraulischen Bindemittel, insbesondere Zement,
b₂) 20 bis 90 Gew.- %, vorzugsweise 40 bis 85 Gew.-%, mindestens eines Zuschlagstoffs oder Füllstoffs,
c₂) 0,001 bis 8 Gew.-%, bevorzugt 0,003 bis 5 Gew.-%, vorzugsweise 0,005 bis 4 Gew.-%, insbesondere 0,01 bis 3 Gew.-%, ganz besonders bevorzugt 0,05 bis 2 Gew.-%, mindestens einer fluororganylsubstituierten Silicium-Verbindung, die in einem wasserlöslichen Polymer eingekapselt ist und in Form des daraus erhaltenen Pulvers oder des in Wasser redispergierten Pulvers, vorliegt, und
gegebenenfalls 0 bis 40 Gew.-% weiterer Komponenten, wobei die jeweils eingesetzten Komponenten in Summe 100 Gew.-% ergeben.

Darüber hinaus kann eine erfindungsgemäße hydraulisch abbindende Mischung in Form eines Mörtels, insbesondere in Form eines Trockenmörtels, vorteilhaft als weitere Komponenten zusätzlich 0.001 bis 3% Celluloseether und/ oder Cellulosefaser, 0,1 bis 40 % eines Dispersionspulvers auf Basis eines wasserunlöslichen, filmbildenden Polymerisats und bis 10 % weitere Hilfsmittel, wobei die jeweils eingesetzten Komponenten in Summe 100 Gew.-% ergeben.

Solche Dispersionspulver sind in der Regel in Wasser redispergierbar und werden üblicherweise durch Trocknung einer wässrigen Dispersion enthaltend mindestens ein wasserunlösliches, filmbildendes Polymerisat erhalten. Solche wässrigen Dispersionen werden typischerweise mittels Emulsions- und/oder Suspensionspolymerisation erhalten.

Solche Polymerisate sind bevorzugt Homo- oder Copolymerisate auf Basis von Vinylacetat, Ethylen-Vinylacetat, Ethylen-Vinylacetat-Vinylversatat, Ethylen-Vinylacetat-(Meth)Acrylat, Ethylen-Vinylacetat-Vinylchlorid, Vinylacetat-Vinylversatat, Vinylacetat-Vinylversatat-(Meth)acrylat, Vinylversatat-(Meth)acrylat, Rein(Meth)Acrylat, Styrol-Acrylat und/oder Styrol-Butadien und können gegebenenfalls bis 30 Gew.-% weitere, funktionelle Monomere enthalten. Solche sind dem Fachmann bekannt. Die Mindestfilmbildungstemperatur (MFT) kann nach DIN 53787 bestimmt werden und beträgt für Anwendungen bei Raumtemperatur typischerweise 20 °C oder weniger, bevorzugt 10 °C oder weniger, insbesondere 5 °C oder weniger, wobei bei wässrigen Systemen die untere Grenze der MFT durch das Gefrieren des Wassers etwa bei 0 °C liegt. Diese Polymerisate sind mit Emulgatoren und/ oder wasserlöslichen Polymeren in bekannterweise stabilisiert. Wässrige Dispersionen sind in der Regel frei von Lösungsmittel. In Wasser redispergierbare Pulver werden typischerweise durch Trocknung, insbesondere durch Sprühtrocknung von wässrigen Dispersionen, welche bevorzugt mit wasserlöslichen Polymeren stabilisiert sind, hergestellt. Kommen sie in Kontakt mit Wasser, redispergieren sie spontan oder allenfalls durch leichtes Umrühren. Ist die wässrige Dispersion oder das in Wasser redispergierbare Pulver Teil einer geeigneten Formulierung, die auch frei von mineralischem Bindemittel sein kann, können sie flexible, gehärtete Mischungen bilden. Solche Mischungen, jedoch ohne die fluororganylsubstituierten Silicium-Verbindung und ohne den gewünschten "easy-to-clean"-Effekt zu erhalten, sind dem Fachmann bekannt.

Die erfindungsgemäßen Mörtel können, nachdem sie mit Wasser angerührt wurden, auf alle bekannten Oberflächen aufgetragen werden. Bevorzugte, nicht-limitierende Beispiele sind Beton, Back- oder Ziegelstein, Holz, Putze, Gips, Estrich, Nivelliermassen, Spachtelmassen, Gipskartonplatten, Zementfaserplatten, expandierte oder extrudierte Polystyrolplatten, Trockenbauelemente, und/ oder Fliesen, insbesondere Seitenränder von Fliesen für Fugenmörtel, genannt.

In einer Ausführungsform wird die erfindungsgemäße härtbare Mischung vorteilhaft als hydraulisch abbindende Mischung in der Betonindustrie eingesetzt werden, wobei man diese in üblichen Zwangsmischern mischt.

Dabei kann man vorteilhaft so vorgehen, dass man den Zement und die festen Zuschläge vormischt, gegebenenfalls flüssige, nicht-wässrige Komponenten ebenfalls mit dem Zement vormischt, wässrige Formulierungen, wie eine erfindungsgemäß eingesetzte wässrige Dispersion, Emulsion oder Redispersion einer fluororganylsubstituierten Silicium-Verbindung hingegen zusammen mit dem Anmachwasser zugibt. Pulverförmige Formulierungen können vorteilhaft im Anmachwasser vordispergiert werden. Der Gehalt an zusätzlich eingebrachtem Wasser kann vorteilhaft bei der Einstellung des gewünschten Wasser-Zement Faktors, auch w/z-Wert genannt, berücksichtigt werden. Die Verarbeitbarkeit der erfindungsgemäßen Mischungen ist im Vergleich zu unmodifizierten Mischungen vorteilhaft unverändert.

Man kann aber auch ein Feststoffgemisch einer erfindungsgemäßen härtbaren Mischung, beispielsweise eine hydraulisch abbindende Mischung, in einem Zwangsmischer vorlegen und in einem Zuge oder Portionsweise eine definierte Menge an Wasser zusetzen und mischen. Alternativ kann das Wasser vorgelegt werden und ein vorgemischtes Feststoffgemisch, beispielsweise ein Trockenmörtel, zudosiert und mit einem üblichen Mischer angerührt werden. Solche Mischvorgänge sind dem Fachmann bekannt.

Eine so erhaltene erfindungsgemäße härtbare Mischung, beispielsweise eine hydraulisch abbindende Mischung kann nachfolgend einer dem Fachmann an sich bekannten Formgebung und Aushärtung unterzogen werden, deren Oberflächen in Sinne der Erfindung vorteilhaft auch bei Abrieb eine nur geringere Verschmutzungsneigung ("easy-to-clean"-Eigenschaft) aufweist.

Ein solches Feststoffgemisch einer bevorzugt hydraulisch abbindenden erfindungsgemäßen Mischung kann man beispielsweise so erhalten, indem man, insbesondere für eine Beton-Mischung, Zement [Komponente gemäß Merkmal a₁], Zuschlagsstoff [Komponente gemäß Merkmal b₁] und eine mit einem wasserlöslichen Polymer eingekapselte fluororganylsubstituierten Silicium-Verbindung [Komponente gemäß Merkmal c₁] in einem Mischbehälter zusammengibt, mischt, sofern erforderlich in einen Transportbehälter füllt und für die Applikation bereitstellt. Ferner kann man einer solchen Feststoffmischung optional Verflüssiger [Komponente gemäß Merkmal d₁] und/oder weitere Hilfsstoffe [Komponente gemäß Merkmal e₁] zu- bzw. beimischen, sofern diese Komponenten pulver- bzw. rieselförmig vorliegen. Sollten diese Komponenten gemäß d₁) bzw. e₁) flüssig sein, kann man sie in dem Fachmann bekannter Art und Weise in eine pulverförmige, bevorzugt rieselfähige Form überführen und einer erfindungsgemäßen Mischung bei- bzw. zumischen.

Für die Applikation einer solchen erfindungsgemäßen Feststoffmischung (auch kurz Mischung genannt) kann man diese in einem Mischer, beispielsweise einem Betonmischer, mit Anmachwasser in an sich bekannter Weise mischen und anschließend verwenden.

Weiter kann eine so erhaltene erfindungsgemäße hydraulisch abbindende Mischung einer dem Fachmann an sich bekannten Formgebung und Aushärtung unterzogen werden, deren Oberflächen im Sinne der Erfindung vorteilhaft auch bei Abrieb eine nur geringere Verschmutzungsneigung ("easy-to-clean"-Eigenschaft) aufweist.

Gegenstand der vorliegenden Erfindung ist somit die Verwendung einer härtbaren Mischung, insbesondere einer hydraulisch abbindenden Mischung, zur Herstellung von Werkstoffen, insbesondere Bauteilen, Betonwaren oder Formkörpern.

Weiter ist Gegenstand der vorliegenden Erfindung die Verwendung einer erfindungsgemäßen hydraulisch abbindenden Mischung zur Herstellung von Werkstoffen, insbesondere Bauteilen, Betonwaren oder Formkörper, wobei deren Oberfläche auch bei Abrieb eine nur geringere Verschmutzungsneigung ("easy-to-clean"-Eigenschaft) aufweist.

Nicht beanspruchter Gegenstand der vorliegenden Erfindung ist die Verwendung eines Pulver gemäß Anspruch 1 wie oben näher spezifiziert, zur Massenmodifizierung einer hydraulisch abbindenden Mischung, insbesondere einer Mischung, die für Betone bevorzugt 6 bis 25 Gew.-% Zement, 50 bis 90 Gew.-% mindestens eines Zuschlagstoffs und 0,001 bis 8 Gew.-% mindestens einer fluororganylsubstituierten Silicium-Verbindung sowie optional 1 bis 20 Gew.-% Wasser und/oder 0,01 bis 2 Gew.-% Verflüssiger und/oder 0,01 bis 1 Gew.-% mindestens eines weiteren Hilfsmittels enthält, und für Trockenmörtel bevorzugt 10 bis 50 Gew.-% Zement, 20 bis 90 Gew.- % mindestens eines Zuschlagstoffs oder Füllstoffs, und 0,001 bis 8 Gew.-% mindestens einer fluororganylsubstituierten Silicium-Verbindung, und gegebenenfalls 0 bis 40 Gew.-% weiterer Komponenten, wobei die jeweils eingesetzten Komponenten in Summe 100 Gew.-% ergeben, wobei die fluororganylsubstituierte Silicium-Verbindung in einem wasserlöslichen Polymer eingekapselt ist und in Form des Pulvers, oder des in Wasser redispergierten Pulvers, vorliegt.

So kann man eine erfindungsgemäße hydraulisch abbindende Mischung vorteilhaft im Baubereich verwenden, insbesondere zur Herstellung von Werkstücken, für Betonpflastersteine, oder auch als Vorsatzbeton, insbesondere in Vorsätzen für Pflastersteine, wobei sich solche Werkstücke vorteilhaft durch "easy-to-clean"-Eigenschaften auszeichnen.

Es ist festzuhalten, dass für die Hersteller von zementgebundenen Werkstücken, insbesondere für die Hersteller von Betonsteinen, es bis heute von großem Interesse war, hydraulisch abbindende, insbesondere zementgebundene Werkstücke nachhaltig zu modifizieren und trotz Abrieb- und Witterungseinflüssen "easy-to-clean"-Eigenschaften an der Oberfläche zu gewährleisten.

In einer nicht beanspruchten Ausführungsform kann die erfindungsgemäße härtbare Mischung in Form eines Mörtels, insbesondere Trockenmörtels, bevorzugt verwendet werden als Fugenmörtel, Reparaturmörtel, Pulverfarben, Klebespachtel, Putze, insbesondere Oberputze sowie Gips- und/ oder Kalk- und/ oder Zement- Putze, Nivelliermörtel, Spachtelmassen, Industriefußbodenmassen, Mörtel für Haftbrücken, Dichtungsschlämmen, Vollwärmeschutzmörtel, Fliesenkleber, Grundierungen und/ oder als zementbasierte Massen für Erdöl-, Erdgas-, und/ oder Erdwärme-Bohrlöcher.

Durch die Bereitstellung und den Einsatz erfindungsgemäßer Mischungen können aufgrund der neu erzielten, trotz Abrieb und Witterung dauerhaften "easy-to-clean"-Eigenschaften von hydraulisch erhärteten Werkstücken Reinigungs- und Wartungskosten durch verlängerte Reinigungszyklen deutlich reduziert werden. Solche Massenmodifizierungen können vorteilhaft insbesondere im laufenden Betrieb eines Herstellwerkes vorgenommen werden und die Werkstücke können bereits fertig geschützt ausgeliefert werden. Zusätzlicher Aufwand an der Baustelle entfällt.

Aber auch vor Ort einer Applikation können erfindungsgemäße Massen hergestellt und vorteilhaft eingesetzt werden.

Die Erfindung wird anhand der nachfolgenden Beispiele näher erläutert, ohne jedoch den Gegenstand der Erfindung zu beschränken. Sofern nicht anders angegeben, wurden die Prüfungen bei einer Temperatur von 23 °C und einer relativen Luftfeuchtigkeit von 50% durchgeführt.

### Beispiele

### Herstellung der verwendeten Pulver

### Beispiel 1:

### Herstellung von Pulver 1 (Vergleichsbeispiel; P1)

39 g n-Octyltriethoxysilan (Hersteller Evonik Degussa) wurden in 560 g einer 25 gew.-%igen wässrigen Lösung eines Polyvinylalkohols mit einem Verseifungsgrad von 88 Mol-% und einer Höppler-Viskosität als 4%ige Lösung von 4 mPa s mit einem Propellerrührer bei 1 000 Upm während 15 Minuten dispergiert und anschließend mit Wasser auf einen Feststoffgehalt von 20 Gew.-% verdünnt. Diese Mischung wurde auf einem Laborsprühturm mit einer Zweistoffdüse mittels Druckluft bei einer Einlasstemperatur von 135 °C versprüht und getrocknet. Als Antibackmittel wurden 0,5 Gew.-% einer pyrogenen Kieselsäure und 10 Gew.-% eines handelsüblichen Carbonates, bezogen auf das fertige Pulver, zugegeben. Es wurde in guter Ausbeute ein frei fließendes, blockstabiles und in Wasser gut redispergierbares weißes Pulver erhalten, wobei im Sprühturm keine nennenswerten Verschmutzungen beobachtet wurden.

### Beispiel 2:

### Herstellung von Pulver 2 (P2)

Das Verfahren zur Herstellung von Pulver 1 wurde wiederholt, wobei als Silan 3,3,4,4,5,5,6,6,7,7,8,8,8-Tridecafluoroctyltriethoxysilan (Dynasylan® F 8261) eingesetzt wurde. Als Antibackmittel wurden 0,5 Gew.-% einer pyrogenen Kieselsäure und 10 Gew.-% eines handelsüblichen Carbonates, bezogen auf das fertige Pulver, zugegeben. Es wurde in guter Ausbeute ein frei fließendes, blockstabiles und in Wasser gut redispergierbares weißes Pulver erhalten, wobei im Sprühturm keine nennenswerten Verschmutzungen beobachtet wurden. Das erhaltene Pulver wurde selbst beim Verreiben zwischen den Fingern nicht schmierig. Daraus lässt sich schließen, dass das erhaltene Pulver die eingesetzte Silicium-Verbindung in gut verkapselter Form enthält.

### Beispiel 3:

### Herstellung von Pulver 3 (Vergleichsbeispiel; VP3)

Das Verfahren zur Herstellung von Pulver 1 wurde wiederholt, wobei 100 g n-Octyltrieethoxysilan (Hersteller Evonik Degussa) in 320 g der 25 gew.-%igen wässrigen Polyvinylalkohol Lösung dispergiert wurde. Als Antibackmittel wurden 0,6 Gew.-% einer pyrogenen Kieselsäure und 9,4 Gew.-% eines handelsüblichen Carbonates, bezogen auf das fertige Pulver, zugegeben. Es wurde in guter Ausbeute ein frei fließendes, blockstabiles und in Wasser gut redispergierbares weißes Pulver erhalten, wobei im Sprühturm keine nennenswerten Verschmutzungen beobachtet wurden.

### Beispiel 4:

### Herstellung von Pulver 4 (P4)

Das Verfahren zur Herstellung von Pulver 3 wurde wiederholt, wobei 75 g n-Octyltrieethoxysilan (Hersteller Evonik Degussa) und 25 g 3,3,4,4,5,5,6,6,7,7,8,8,8-Tridecafluoroctyltriethoxysilan (Dynasylan® F 8261) in 400 g der 25 gew.-%igen wässrigen Polyvinylalkohol Lösung dispergiert wurden. Es wurde in guter Ausbeute ein frei fließendes, blockstabiles und in Wasser gut redispergierbares weißes Pulver erhalten, wobei im Sprühturm keine nennenswerten Verschmutzungen beobachtet wurden. Das erhaltene Pulver wurde selbst beim Verreiben zwischen den Fingern nicht schmierig. Daraus lässt sich schließen, dass das erhaltene Pulver die eingesetzten Silicium-Verbindungen in gut verkapselter Form enthält.

### Beispiel 5:

### Herstellung von Pulver 5 (P5)

Das Verfahren zur Herstellung von Pulver 4 wurde wiederholt, wobei 50 g n-Octyltrieethoxysilan (Hersteller Evonik Degussa) und 50 g 3,3,4,4,5,5,6,6,7,7,8,8,8-Tridecafluoroctyltriethoxysilan (Dynasylan® F 8261) in der Polyvinylalkohol Lösung dispergiert wurden. Es wurde in guter Ausbeute ein frei fließendes, blockstabiles und in Wasser gut redispergierbares weißes Pulver erhalten, wobei im Sprühturm keine nennenswerten Verschmutzungen beobachtet wurden. Das erhaltene Pulver wurde selbst beim Verreiben zwischen den Fingern nicht schmierig. Daraus lässt sich schließen, dass das erhaltene Pulver die eingesetzten Silicium-Verbindungen in gut verkapselter Form enthält.

### Beispiel 6:

### Herstellung von Pulver 6 (P6)

Das Verfahren zur Herstellung von Pulver 4 wurde wiederholt, wobei 25 g n-Octyltrieethoxysilan (Hersteller Evonik Degussa) und 75 g 3,3,4,4,5,5,6,6,7,7,8,8,8-Tridecafluoroctyltriethoxysilan (Dynasylan® F 8261) in der Polyvinylalkohol Lösung dispergiert wurden. Es wurde in guter Ausbeute ein frei fließendes, blockstabiles und in Wasser gut redispergierbares weißes Pulver erhalten, wobei im Sprühturm keine nennenswerten Verschmutzungen beobachtet wurden. Das erhaltene Pulver wurde selbst beim Verreiben zwischen den Fingern nicht schmierig. Daraus lässt sich schließen, dass das erhaltene Pulver die eingesetzten Silicium-Verbindungen in gut verkapselter Form enthält.

### Beispiel 7:

### Herstellung von Pulver 7 (P7)

Das Verfahren zur Herstellung von Pulver 4 wurde wiederholt, wobei 100 g 3,3,4,4,5,5,6,6,7,7,8,8,8-Tridecafluoroctyltriethoxysilan (Dynasylan® F 8261) in der Polyvinylalkohol Lösung dispergiert wurden. Es wurde in guter Ausbeute ein frei fließendes, blockstabiles und in Wasser gut redispergierbares weißes Pulver erhalten, wobei im Sprühturm keine nennenswerten Verschmutzungen beobachtet wurden. Das erhaltene Pulver wurde selbst beim Verreiben zwischen den Fingern nicht schmierig. Daraus lässt sich schließen, dass das erhaltene Pulver die eingesetzte Silicium-Verbindung in gut verkapselter Form enthält.

### Beispiel 8:

### Bestimmung der Menge an Silicium-Verbindung in Pulver P7

Es wurden 2 Proben von Pulver (P7) mit Dichlormethan unter Rückfluss extrahiert. Die Einwaage und Extraktionszeiten sind in Tabelle 1 angegeben. Anschließend wurde filtriert und die CH₂Cl₂-Phase wurde am Rotationsverdampfer vom Lösemittel befreit. Die Auswaage ist ebenfalls in Tabelle 1 angegeben.

**Tabelle 1: Quantitative Analyse der eingesetzten Silicium-Verbindung in Pulver P7**

| **Einwaage** | **Extraktionszeit** | **Auswaage / Anteil** |
|---|---|---|
| 8,03 g | 2 Std. | 4,01 g / 49,9 Gew.-% |
| 7,99 g | 6,25 Std. | 3,80 g / 50,3 Gew.-% |

Vom Rückstand wurde jeweils ein ¹H-NMR und ein ²⁹Si-NMR Spektrum aufgenommen. Die ¹H- und ²⁹Si-NMR Spektren zeigen, dass das Tridecafluoroctyltriethoxysilan weiterhin als nicht hydrolysiertes monomeres Silan vorliegt. Oligomere Anteile wurden nicht beobachtet. Polyvinylalkohol konnte nicht nachgewiesen werden.

Die Resultate aus Tabelle 1 zeigen, dass die gesamte Menge der eingesetzten Silicium-Verbindung mittels Sprühtrocknung in ein in Wasser redispergierbares Pulver überführt werden kann und das Tridecafluoroctyltriethoxysilan im Pulver nahezu vollständig als Monomer vorliegt. Zudem kann die eingesetzte Menge Silicium-Verbindung vollständig mittels Dichlormethan extrahiert und quantitative bestimmt werden kann.

### Herstellung von Mörtelprüfkörpern

### Allgemeine Vorschrift für die Beispiele 9 bis 16

Die verwendeten Mörtelprüfkörper wurden aus einem handelsüblichen Universalmörtel (Mörtelgruppe II gemäß DIN V 18580, Mörtelgruppe P II gemäß DIN V 18550) der Firma Quick-Mix angefertigt. Dazu wurden je ca. 100 g des Mörtels mit ca. 24 ml Wasser innig verrührt. Das in den Beispielen jeweils aufgeführte Zusatzmittel wurde jeweils im Anmachwasser vordispergiert. Die entstandene Mischung wurde in PE-Schalungen gefüllt, 24 h bei 25 °C getrocknet, anschließend entschalt und für weitere 28 Tage bei 25 °C ausgehärtet. Die Verschmutzungseigenschaften wurden in Anlehnung an DIN EN ISO 10545-14 bestimmt, der Test wird unten genauer beschrieben.

Angaben in Gew.-% beziehen sich jeweils auf das Gewicht der vollständigen Trockenmischung.

### Beispiel 9: (Vergleichsbeispiel)

Ein Mörtelprüfkörper wurde wie oben beschrieben hergestellt. Dabei wurden keine Zusatzmittel eingesetzt.

### Beispiel 10:

Ein Mörtelprüfkörper wurde wie oben beschrieben hergestellt. Im Anmachwasser wurden vor Zugabe 2 Gew.-% von Pulver 7 dispergiert.

### Beispiel 11:

Ein Mörtelprüfkörper wurde wie oben beschrieben hergestellt. Im Anmachwasser wurden vor Zugabe 5 Gew.-% von Pulver 7 dispergiert.

### Beispiel 12: (Vergleichsbeispiel)

Ein Mörtelprüfkörper wurde wie oben beschrieben hergestellt. Im Anmachwasser wurden vor Zugabe 2 Gew.-% einer o/w Emulsion, die 50 Gew.-% eines Octyltriethoxysilans enthält, dispergiert.

### Auswertung der "easy-to-clean" Eigenschaften (Beispiele 9 bis 12)

Auf die Oberfläche der ausgehärteten Mörtelprüfkörper (nicht auf die Schalseite) wurde je ein Tropfen (ca. 0,5 ml) der Verschmutzungsagentien Kaffee (schwarz, gezuckert, kalt), Cola, Rotwein, sowie Olivenöl aufgetragen. Nach 1h Einwirkzeit bei 25 °C wurde die Oberfläche mit einem weichen Tuch abgetupft und mit vollentsalztem Wasser für 3 min beaufschlagt. Schließlich wird das Wasser mit einem weichen Tuch abgetupft und die Verschmutzung der Oberfläche nach Trocknung visuell beurteilt. Dabei bedeutet 5, dass keine Verschmutzungen sichtbar sind, 4 bedeutet, dass Verschmutzungen schwach sichtbar sind, 3 bedeutet, dass Verschmutzungen sichtbar sind, 2 bedeutet, dass Verschmutzungen deutlich sichtbar sind und 1 bedeutet, dass Verschmutzungen stark sichtbar sind. Von guten "easy-to-clean"-Eigenschaften kann nur gesprochen werden, wenn eine deutliche Verbesserung gegen eine unbehandelte Vergleichsprobe erreicht wird. Von sehr guten "easy-to-clean"-Eigenschaften kann gesprochen werden, wenn die 3 wässrigen Verschmutzungsagentien (Kaffee, Cola, Rotwein) jeweils eine 4 oder 5 erreichen und gleichzeitig Olivenöl eine deutliche Verbesserung gegen eine unbehandelte Vergleichsprobe erreicht. In Tabelle 2 sind die Ergebnisse der Verschmutzungsprüfung dargestellt.

**Tabelle 2: Ergebnisse der Verschmutzungsprüfung**

| Beispiel | Verschmutzung mit | | | |
|---|---|---|---|---|
| | Kaffee (gezuckert) | Cola | Rotwein | Olivenöl |
| 9 (Ref.) | 1 | 5 | 1 | 1 |
| 12 (Ref.) | 2 | 4 | 1 | 1 |
| 10 | 3 | 4 | 4 | 5 |
| 11 | 4 | 5 | 4 | 4 |

Es wird deutlich, dass man gemäß oben stehender Definition mit den erfindungsgemäßen Mischungen aus Beispiel 10 und 11 sehr gute "easy-to-clean"-Eigenschaften erreicht Zudem zeichnen sich die Mörtel enthaltend die erfindungsgemäßen Pulver durch eine sehr gute Mörtelverarbeitung und eine erhöhte Homogenität der Mischung aus. Die Vergleichsmischung 12, die ausschließlich fluorfreies Alkylsilan enthält, wodurch die Mörteloberfläche hydrophob aber nicht oleophob ausgestattet wurde, zeigt dagegen selbst bei wässriger Verschmutzung mit Kaffee oder Rotwein keine Verbesserung der Reinigungseigenschaften in Bezug zur Vergleichsmischung 9 ohne Zusatzmittel.

### Hydrophobierungstest mit Vollwärmeschutz Mörtelrezeptur

Es wurde eine Grundformulierung hergestellt, bestehend aus 34 Teilen Portlandzement CEM I 42,5R, 60,8 Teilen eines Quarzsandes mit einer mittleren Korngröße von 0,20 mm (Quarzsand F34), 3,0 Teilen Kalkhydrat, 0,2 Teilen einer Methylhydroxyethylcellulose und 2 Teilen eines filmbildenden, in Wasser redispergierbaren Dispersionspulvers auf Basis eines wasserunlöslichen Ethylen/Vinylacetat Copolymeren (Elotex FX2320). Zu dieser Formulierung wurden 0,2 Teile des in Tabelle 3 angegebenen Pulvers versetzt. 200 g dieser Vormischung wurden anschließend mit 22 Gew.-Teilen Wasser, bezogen auf 100 Gew.-Teile Trockenformulierung, mit einem 60 mm Propellerrührer mit einer Geschwindigkeit von 950 Upm während 60 Sekunden angerührt. Nach einer Reifezeit von 3 Minuten wurde der Mörtel von Hand nochmals kurz aufgerührt und mit Hilfe von Schablonen wurden 3 mm dicke Streifen auf Zementfaserplatten mit einer Wasseraufnahmefähigkeit von bis zu 20 Masse % aufgezogen. Nach 24 Stunden Lagerung bei Normklima (23 °C/50 % r.F.) wurde die obere Hälfte eines Streifens mit einem Korundstein ca. 1mm abgeschliffen. Auf beiden Hälften des Streifens wurde anschließend je ein Wassertropfen in angegebener Menge aufgebracht und die Zeit gemessen bis die Tropfen vollständig aufgesaugt waren.

**Tabelle 3: Es wurde die Zeit in Minuten gemessen, bis ein Wassertropfen (ca. 0,2 ml) vollständig vom abgebundenen Mörtel aufgesaugt wurde.**

| Pulver | Ohne Additiv | VP1 (Ref) | P2 |
|---|---|---|---|
| Pulver und Menge | 0 % (Ref) | 0,2 % | 0,2 % |
| Oberfläche ungeschliffen | 20 | 330 | 618 |
| Oberfläche abgeschliffen | 1 | 55 | 520 |

Die abgeschliffene Mörteloberfläche des Mörtels ohne Additiv saugt den Wassertropfen sofort auf, während die ungeschliffene Mörteloberfläche nur leicht hydrophober ist. Wird jedoch ein hydrophobierendes Pulver eingesetzt (P1) braucht es nur geringe Mengen, um die Oberfläche zu hydrophobieren. Allerdings beschränkt sich dieser Effekt auf die Oberfläche. Denn wenn diese beschädigt, beispielsweise abgeschliffen, wird, reduziert sich die hydrophobierende Wirkung drastisch. Wird jedoch ein erfindungsgemäßes Pulver einsetzt, braucht nicht nur der Wassertropfen doppelt so lange, bis er im Mörtel aufgesaugt ist, sondern auch die abgeschliffene Oberfläche zeigt eine beinahe so gute Hydrophobierung, was auf eine hervorragende Massenhydrophobierung schließen lässt. Durch diese ausgeprägte Hydrophobie und Oleophobie perlen sowohl wässrige als auch ölige Mischungen ab und dringen nicht in die Mörtelschicht ein. Gegebenenfalls können sie auch problemlos und vollständig auf dem Untergrund aufgesogen werden, ohne dass sie eine Verschmutzung hinterlassen.

Diese Resultate sind umso erstaunlicher, als dass nur eine sehr geringe Pulvermenge, die wiederum weniger als 20 Gew.-% einer fluororganylsubstituierten Silicium-Verbindung enthält, eingesetzt wurde. Zudem zeigen die ausgehärteten Mörtel eine gute Adhäsion zum Untergrund, eine gute Kohäsion sowie keine nennenswerte Veränderung des Abbindeverhaltens.

### Oleophobierungstest mit einer Fugenfüller Mörtelrezeptur

Es wurde eine Grundformulierung hergestellt, bestehend aus 40 Teilen Portlandzement CEM I 52,5R, 3 Teilen Tonerdeschmelzzement (Ternal RG), 53,3 Teilen eines Quarzsandes mit einer mittleren Korngröße von 0.20 mm (Quarzsand F34), 0,1 Teilen Weinsäure, 1 Teil einer Cellulosefaser, 1 Teil Titandioxid (Kronos 2190) und 2 Teilen eines filmbildenden, in Wasser redispergierbaren Dispersionspulvers auf Basis eines wasserunlöslichen Ethylen/Vinylacetat Copolymeren (Elotex MP2100). Zu dieser Formulierung wurden 0,2 Teile des in Tabelle 4 angegebenen Pulvers versetzt. 200 g dieser Vormischung wurden anschließend mit 22 Gew.-Teilen Wasser, bezogen auf 100 Gew.-Teile Trockenformulierung, mit einem 60 mm Propellerrührer mit einer Geschwindigkeit von 950 Upm während 60 Sekunden angerührt. Nach einer Reifezeit von 3 Minuten wurde der Mörtel von Hand nochmals kurz aufgerührt und mit Hilfe von Schablonen wurden je zwei 3 mm dicke Streifen auf Zementfaserplatten mit einer Wasseraufnahmefähigkeit von bis zu 20 Masse % aufgezogen. Nach 7 Tagen Lagerung bei Normklima (23°C/50% r.F.) wurde je ein Tropfen Olivenöl (ca. 0.2 ml) aufgebracht und die Zeit gemessen bis der Tropfen vollständig aufgesaugt war.

**Tabelle 4: Die Zeit in Minuten, bis ein Olivenöltropfen (ca. 0,2 ml) vollständig von der ausgehärteten, ungeschliffenen Mörteloberfläche aufgesaugt wurde, in Abhängigkeit des eingesetzten Pulvers.**

| Pulver | ohne Additiv | VP3 (Ref) | P4 | P5 | P6 | P7 |
|---|---|---|---|---|---|---|
| Pulver Menge | 0 % (Ref) | 0,2 % | 0,2 % | 0,2 % | 0,2 % | 0,2 % |
| Anteil F-Silan^{a)} | 0% | 0% | 25 % | 50 % | 75 % | 100 % |
| Zeit [Min.] | 12 | 16 | 25 | 61 | 91 | 124 |

| | | | | | | |
|---|---|---|---|---|---|---|
| a) Anteil der fluororganylsubstituierten Silicium-Verbindung ("F-Silan") an der Gesamtmenge an dispergierter Silicium-Verbindung | | | | | | |

Ohne oleophobierendes Pulver wird ein Olivenöltropfen schon innerhalb von wenigen Minuten vollständig vom ausgehärteten Mörtel aufgesogen. Der Einsatz eines im Mörtel hydrophobierenden Additivs bewirkt nur eine geringfügige Verzögerung der Absorption des Wassertropfens. Wird jedoch mehr und mehr einer fluororganylsubstituierten Silicium-Verbindung dem Pulver beigemischt, verstärken sich die oleophobierenden - und somit auch die Schmutz abweisenden Eigenschaften schnell. Die dadurch erhaltenen wünschenswerten "easy-to-clean"-Eigenschaften können weiter verbessert werden, in dem der Anteil an erfindungsgemäßem Pulver erhöht wird. Zudem zeigen die ausgehärteten Mörtel eine gute Adhäsion zum Untergrund, eine gute Kohäsion sowie keine nennenswerte Veränderung des Abbindeverhaltens.

### Kontaktwinkelmessung an der Oberfläche der Fugenfüller Mörtelrezeptur

Es wurde eine Fugenfüller Mörtelrezeptur wie oben beschrieben hergestellt und Prismen mit den Massen 8 x 4 x 4 cm nach EN 12808-5 hergestellt, wobei jedoch kein Schalöl verwendet wurde. Nach 1 Tag wurden die Prismen ausgeschalt und nach insgesamt 28 Tagen Lagerung bei Normklima (23 °C/50 % r.F.) wurde der Kontaktwinkel von Wasser und von Olivenöl 2 min nach Tropfenauftrag auf einer Prismenseitenfläche gemessen. Der Kontaktwinkel wurde optisch mittels einer Kamera mit einem Kontaktwinkelgerät Typ DSA100 der Fa. Krüss bestimmt. Die Auswertung erfolgte mit der geräteinternen Tropfenkonturanalysesoftware DSA1 v1.90 mit der Methode "Tangenten-Verfahren 1" bzw. bei Kontaktwinkeln kleiner als 30° mit der Methode "Kreissegmentverfahren".

**Tabelle 5: Kontaktwinkelmessung an der Oberfläche der Fugenfüller Mörtelrezeptur, gemessen 2 min nach Tropfenauftrag (ca. 20 µl Wasser resp. Olivenöl). Je hydrophober resp. oleophober die Oberfläche des Mörtels ist, desto größer ist der Kontaktwinkel des jeweiligen Tropfens.**

| Prüfflüssigkeit | ohne Additiv (Vergleich) | PVOH ^{a)} (Vergleich) | 0,2% Pulver Einsatzmenge | | 0,4% Pulver Einsatzmenge | |
|---|---|---|---|---|---|---|
| | 0 % (Ref) | 0,16 % (Ref) | VP3 (Ref) | P7 | VP3 (Ref) | P7 |
| Wasser | 21.9 | 41.3 | 117.5 | 116.8 | 118.3 | 119.9 |
| Olivenöl | 5.7 | 14.5 | 37.3 | 97.9 | 52.4 | 101.2 |

| | | | | | | |
|---|---|---|---|---|---|---|
| a) PVOH steht für den bei der Herstellung der Pulver P1 bis P7 verwendeten Polyvinylalkohol. Die eingesetzte Menge von 0,16 % entspricht der Polyvinylalkohol Menge, die beim Beispiel mit 0,4 % Pulver P7 zugegeben wurde. | | | | | | |

Die Werte von Tabelle 5 zeigen eindrücklich, dass die Mörteloberfläche ohne Additiv sowohl weder hydrophob noch oleophob ist, d. h. sowohl Wasser wie Olivenöl benetzen sehr gut, was eine schnelle Absorption der Flüssigkeit stark begünstigt. Wenn als wasserlösliches Polymer Polyvinylalkohol eingesetzt wird, welches beispielsweise im Pulver P7 enthalten ist, verändern sich diese Mörteleigenschaften nur unwesentlich. Wird n-Octyltriethoxysilan in wasserlöslichem Polymer verkapselt und in getrockneter Form als Pulver eingesetzt (VP3), steigt zwar der Kontaktwinkel des Wassertropfens stark an, was auf eine gute Hydrophobie schließen lässt. Der Olivenöltropfen benetzt jedoch nach wie vor relativ gut, auch bei erhöhter Einsatzmenge. Werden jedoch lediglich 02 Gew.-% des erfindungsgemäßen Pulvers P7 eingesetzt, was einer Menge an einer fluororganylsubstituierten Silicium-Verbindung von nur etwa 0,1 Gew.-% entspricht, so zeigt die Mörteloberfläche überraschenderweise schon eine sehr gute Oleophobie. Diese kann mit einer Erhöhung der Pulvermenge noch weiter verbessert werden - und dies trotz des im Pulver vorliegenden hohen Anteils an hydrophilem Polyvinylalkohol!

## Patentansprüche

1. Eine härtbare Mischung, geeignet um in der ausgehärteten Mischung "easy-to-clean"- Eigenschaften zu erhalten, enthaltend
- mindestens ein mineralisches Bindemittel,
- ein Pulver umfassend mindestens eine fluororganylsubstituierte Silicium-Verbindung, die in einem wasserlöslichen Polymer eingekapselt ist, wobei die Menge der fluororganylsubstituierten Silicium-Verbindung 0,001 bis 8 Gew.-%, bezogen auf die vorliegende Mischung, beträgt, wobei das wasserlösliche Polymer und die Silicium-Verbindung Partikel bilden, die in Wasser dispergierbar und/ oder redispergierbar sind, wobei das wasserlösliche Polymer ausgewählt ist aus der Reihe der Polysaccharide, Polysaccharidether, Proteine, Vinyl-Polymerisate, Formaldehyd-Kondensate und Alkylenoxid-Polymerisate, und
- optional weitere Zusatzstoffe.

2. Mischung nach Anspruch 1, **dadurch gekennzeichnet, dass** das mineralische Bindemittel mindestens ein hydraulisch abbindendes Bindemittel ausgewählt aus der Reihe der Zemente, der Portland-Zemente, der Kompositzemente, der Zemente mit Anteilen an Puzzolanen und der Hochofenzemente umfasst.

3. Mischung nach Anspruch 1 oder 2, **dadurch gekennzeichnet, dass** die fluororganylsubstituierte Silicium-Verbindung ausgewählt ist aus der Reihe fluororganylsubstituierter Silane und fluororganylsubstituierter Siloxane und fluororganylsubstituierter Silicone oder Mischung davon, bevorzugt ausgewählt ist aus der Reihe fluoralkylsubstituierter Siloxane oder monomerer fluoralkylsubstituierter Silane, insbesondere fluoralkylsubstituierter und Alkoxy- bzw. Hydroxy-Gruppen tragender Siloxane oder monomerer fluoralkylsubstituierter Alkoxysilane, oder Mischungen davon.

4. Mischung nach mindestens einem der Ansprüche 1 bis 3, **dadurch gekennzeichnet, dass** die fluororganylsubstituierte Silicium-Verbindung ein Fluoralkylalkoxysilan der Formel
F₃C(CF₂)ₓ(C₂H₄)_{y}Si(CH₃)_{z}(OR)_{3-z}
ist, wobei jedes R unabhängig voneinander aus der Gruppe bestehend aus Methyl, Ethyl, n-Propyl und i-Propyl ausgewählt ist, x eine ganze Zahl mit einem Wert von 0 bis 16, y = 0 oder 1, und z = 0 oder 1, vorzugsweise y = 1, und ganz besonders bevorzugt y = 1, z = 0 und x = 4, 6, 8 oder 10, ist.

5. Mischung nach Anspruch 4, **dadurch gekennzeichnet, dass** die fluororganylsubstituierte Silicium-Verbindung Tridecafluor-1,1,2,2-tetrahydrooctyltriethoxy-silan und/ oder Tridecafluor-1,1,2,2-tetrahydrooctyltrimethoxysilan ist.

6. Mischung nach mindestens einem der Ansprüche 1 bis 5, **dadurch gekennzeichnet, dass** der Anteil der fluororganylsubstituierten Silicium-Verbindung im Pulver 2,5 bis 90 Gew.-% beträgt.

7. Mischung nach mindestens einem der Ansprüche 1 bis 6, **dadurch gekennzeichnet, dass** die flüssige fluororganylalkoxysubstituierte Silicium-Verbindung in einem wasserlöslichen Polymer eingekapselt ist, eine durchschnittliche Tröpfchengröße von 10 nm bis 10 µm aufweist und im Wesentlichen nicht hydrolysiert ist.

8. Mischung nach mindestens einem der Ansprüche 1 bis 7, enthaltend Zusatzstoffe, wobei die Zusatzstoffe als Zuschlagstoff sowie als Hilfsmittel definiert sind und der Zuschlagstoff aus der Reihe der Aggregate, Sande, Kiese, Splitte, Porphyr, Quarzmehl, Kalkmehl, Gesteinsmehl, Flugaschen, Mikrosilica und sonstige silikatische Zusatzstoffe oder Mischungen davon ausgewählt ist, wobei bevorzugt mindestens ein Zuschlagstoff mit 5 bis 63 mm Größtkorn ausgewählt ist, besonders bevorzugt ist ein Aggregat mit 32 mm Größtkorn und/oder Sand mit 5 mm Größtkorn.

9. Mischung nach mindestens einem der Ansprüche 1 bis 8, umfassend
- 2 bis 60 Gew.-% hydraulisches Bindemittel, insbesondere Zement,
- 30 bis 90 Gew.-% mindestens eines Zuschlagstoffs,
- 0,001 bis 8 Gew.-% einer fluororganylsubstituierten Silicium-Verbindung, und
- gegebenenfalls 0 bis 40 Gew.-% weiterer Komponenten,
wobei die jeweils eingesetzten Komponenten in Summe 100 Gew.-% ergeben.

10. Mischung nach Anspruch 9, insbesondere in Form einer Betonmischung enthaltend als weitere Komponenten
- 0,01 bis 2 Gew.-% eines Verflüssigers, und/oder
- 0,01 bis 10 Gew.-% weiterer Hilfsmittel, oder
in Form eines Trockenmörtels, enthaltend als weitere Komponenten
- 0.001 bis 3 Gew.-% Celluloseether und/ oder Cellulosefaser,
- 0,1 bis 40 Gew.-% eines Dispersionspulvers auf Basis eines wasserunlöslichen, filmbildenden Polymerisats, und
- 0 bis 10 Gew.-% weitere Hilfsmittel,
wobei die jeweils eingesetzten Komponenten in Summe 100 Gew.-% ergeben.

11. Mischung nach mindestens einem der Ansprüche 1 bis 10, enthaltend als weitere Komponente 1 bis 50 Gew.-% Wasser, bezogen auf die Mischung, wobei die jeweils eingesetzten Komponenten in Summe 100 Gew.-% ergeben, wobei das Wasser mit einberechnet ist.

12. Verwendung eines in Wasser redispergierbaren Pulvers,
umfassend ein wasserlösliches Polymer mit einer oder mehreren darin eingekapselten organischen Silizium-Verbindungen, wobei mindestens eine organische Silizium-Verbindung ganz oder teilweise fluoriert ist und, wenn Mischungen von fluroorganylsubstituierten und nicht fluororganylsubstituierten Silicium-Verbindungen eingesetzt werden, der Anteil der fluorsubstituierten Silicium-Verbindung mindestens 25 Gew.-%, bezogen auf die Gesamtmenge der eingesetzten Silicium-Verbindung, beträgt, wobei das wasserlösliche Polymer und die Silicium-Verbindung Partikel bilden, die in Wasser dispergierbar und/ oder redispergierbar sind, wobei das wasserlösliche Polymer ausgewählt ist aus der Reihe der Polysaccharide, Polysaccharidether, Proteine, Vinyl-Polymerisate, Formaldehyd-Kondensate und Alkylenoxid-Polymerisate,
in einer härtenden Mischung nach einem der Ansprüche 1 bis 11, um in der ausgehärteten Mischung "easy-to-clean"- Eigenschaften zu erhalten.

13. Verwendung nach Anspruch 12, wobei in dem Pulver die fluororganyl-substituierte Silicium-Verbindung ein Fluoralkylalkoxysilan der Formel
F₃C(CF₂)ₓ(C₂H₄)_{y}Si(CH₃)_{z}(OR)_{3-z}
ist, wobei jedes R unabhängig voneinander aus der Gruppe bestehend aus Methyl, Ethyl, n-Propyl und i-Propyl ausgewählt ist, x eine ganze Zahl mit einem Wert von 0 bis 16, y = 0 oder 1, und z = 0 oder 1, vorzugsweise y = 1, und ganz besonders bevorzugt y = 1, z = 0 und x = 4, 6, 8 oder 10, ist.

14. Verwendung nach Anspruch 13, **dadurch gekennzeichnet, dass** die fluororganyl-substituierte Silicium-Verbindung Tridecafluor-1,1,2,2-tetrahydrooctyltriethoxy-silan und/oder Tridecafluor-1,1,2,2-tetrahydrooctyltrimethoxysilan ist.

15. Verwendung einer härtbaren Mischung nach einem der Ansprüche 1 bis 11 zur Herstellung von Werkstoffen, insbesondere Bauteilen, Betonwaren, Vorsatzbeton oder Formkörpern aus Beton.

16. Verwendung eines Pulvers gemäß Anspruch 1 in einer hydraulisch härtbaren Mischung, wobei die Mischung enthält 2 bis 60 Gew.-% Zement, 30 bis 90 Gew.-% mindestens einen Zuschlagstoff, 0,001 bis 8 Gew.-% der fluororganylsubstituierten Silicium-Verbindung und gegebenenfalls weiterer Hilfsmittel, um in der ausgehärteten Mischung "easy-to-clean"-Eigenschaften zu erhalten.

## Claims

1. A curable mixture suitable for obtaining "easy-to-clean" properties in the cured mixture and comprising
- at least one mineral binder,
- a powder comprising at least one fluoroorganyl-substituted silicon compound encapsulated in a water-soluble polymer, the amount of the fluoroorganyl-substituted silicon compound being 0.001% to 8% by weight, based on the present mixture, and the water-soluble polymer and the silicon compound form particles which are dispersible and/or redispersible in water, the water-soluble polymer being selected from the group of the polysaccharides, polysaccharide ethers, proteins, vinyl polymers, formaldehyde condensates and alkylene oxide polymers, and
- optionally further additives.

2. Mixture according to Claim 1, **characterized in that** the mineral binder comprises at least one hydraulically setting binder selected from the group of the cements, Portland cements, composite cements, cements with fractions of pozzolans and blast furnace cements.

3. Mixture according to Claim 1 or 2, **characterized in that** the fluoroorganyl-substituted silicon compound is selected from the group of fluoroorganyl-substituted silanes and fluoroorganyl-substituted siloxanes and fluoroorganyl-substituted silicones or a mixture thereof, preferably selected from the group of fluoroalkyl-substituted siloxanes or monomeric fluoroalkyl-substituted silanes, more particularly fluoroalkyl-substituted siloxanes which carry alkoxy and/or hydroxyl groups, or monomeric, fluoroalkyl-substituted alkoxysilanes, or mixtures thereof.

4. Mixture according to at least one of Claims 1 to 3, **characterized in that** the fluoroorganyl-substituted silicon compound is a fluoroalkylalkoxysilane of the formula
F₃C(CF₂)ₓ(C₂H₄)_{y}Si(CH₃)_{z}(OR)_{3-z}
where each R independently of any other is selected from the group consisting of methyl, ethyl, n-propyl and isopropyl, x is an integer having a value of 0 to 16, y = 0 or 1, and z = 0 or 1, preferably y = 1, and very preferably y = 1, z = 0 and x = 4, 6, 8 or 10.

5. Mixture according to Claim 4, **characterized in that** the fluoroorganyl-substituted silicon compound is tridecafluoro-1,1,2,2-tetrahydrooctyltriethoxysilane and/or tridecafluoro-1,1,2,2-tetrahydrooctyltrimethoxysilane.

6. Mixture according to at least one of Claims 1 to 5, **characterized in that** the fraction of the fluoroorganyl-substituted silicon compound in the powder is 2.5% to 90% by weight.

7. Mixture according to at least one of Claims 1 to 6, **characterized in that** the liquid fluoroorganylalkoxy-substituted silicon compound is encapsulated in a water-soluble polymer, has an average droplet size of 10 nm to 10 µm, and is substantially nonhydrolyzed.

8. Mixture according to at least one of Claims 1 to 7, comprising additives, the additives being defined as aggregate and also as auxiliary and the aggregate being selected from the group of aggregates, sands, gravels, grits, porphyry, quartz flour, ground limestone, ground rock, flyashes, microsilica and other silicatic additives or mixtures thereof, preference being given to selecting at least one aggregate having a maximum particle size of 5 to 63 mm, particular preference being given to an aggregate having a maximum particle size of 32 mm and/or to sand having a maximum particle size of 5 mm.

9. Mixture according to at least one of Claims 1 to 8, comprising
- 2% to 60% by weight of hydraulic binder, more particularly cement,
- 30% to 90% by weight of at least one aggregate,
- 0.001% to 8% by weight of a fluoroorganyl-substituted silicon compound, and
- optionally 0% to 40% by weight of further components,
each of the components used adding to give 100% by weight.

10. Mixture according to Claim 9, more particularly in the form of a concrete mixture comprising as further components
- 0.01% to 2% by weight of a plasticizer, and/or
- 0.01% to 10% by weight of further auxiliaries, or in the form of a dry mortar comprising as further components
- 0.001% to 3% by weight of cellulose ethers and/or cellulose fibers,
- 0.1% to 40% by weight of a dispersion powder based on a water-insoluble, film-forming polymer, and
- 0% to 10% by weight of further auxiliaries,
each of the components used adding to give 100% by weight.

11. Mixture according to at least one of Claims 1 to 10, comprising as a further component 1% to 50% by weight of water, based on the mixture, each of the components used adding to give 100% by weight, the water being included in the calculation.

12. Use of a water-redispersible powder comprising a water-soluble polymer having one or more organic silicon compounds encapsulated therein, at least one organic silicon compound being wholly or partly fluorinated and, if mixtures of fluoroorganyl-substituted and non- fluoroorganyl-substituted silicon compounds are used, the fraction of the fluoro-substituted silicon compound is at least 25% by weight, based on the total amount of the silicon compound used, and the water-soluble polymer and the silicon compound form particles which are dispersible and/or redispersible in water, the water-soluble polymer being selected from the group of the polysaccharides, polysaccharide ethers, proteins, vinyl polymers, formaldehyde condensates and alkylene oxide polymers, in a curing mixture according to one of Claims 1 to 11, for obtaining "easy-to-clean" properties in the cured mixture.

13. Use according to Claim 12, where the fluoroorganyl-substituted silicon compound in the powder is a fluoroalkylalkoxysilane of the formula
F₃C(CF₂)ₓ(C₂H₄)_{y}Si(CH₃)_{z}(OR)_{3-z}
where each R independently of any other is selected from the group consisting of methyl, ethyl, n-propyl and isopropyl, x is an integer having a value of 0 to 16, y = 0 or 1, and z = 0 or 1, preferably y = 1, and very preferably y = 1, z = 0 and x = 4, 6, 8 or 10.

14. Use according to Claim 13, **characterized in that** the fluoroorganyl-substituted silicon compound is tridecafluoro-1,1,2,2-tetrahydrooctyltriethoxysilane and/or tridecafluoro-1,1,2,2-tetrahydrooctyltrimethoxysilane.

15. Use of a curable mixture according to one of Claims 1 to 11 for producing materials, more particularly components, concrete goods, facing concrete, or concrete moldings.

16. Use of a powder according to Claim 1 in a hydraulically curable mixture, the mixture comprising 2% to 60% by weight of cement, 30% to 90% by weight of at least one aggregate, 0.001% to 8% by weight of the fluoroorganyl-substituted silicon compound, and optionally further auxiliaries, for obtaining "easy-to-clean" properties in the cured mixture.

## Revendications

1. Mélange durcissable, approprié pour obtenir des caractéristiques « easy-to-clean » (facile à nettoyer) dans le mélange durci, contenant
- au moins un liant minéral,
- une poudre comprenant au moins un composé de silicium substitué par fluoroorganyle, qui est encapsulé dans un polymère soluble dans l'eau, la quantité de composé du silicium substitué par fluoroorganyle étant de 0,001 à 8 % en poids, par rapport au mélange présent, le polymère soluble dans l'eau et le composé de silicium formant des particules qui sont dispersibles et/ou redispersibles dans l'eau, le polymère soluble dans l'eau étant choisi dans la série des polysaccharides, des éthers de polysaccharides, des protéines, des polymérisats de vinyle, des condensats de formaldéhyde et des polymérisats d'oxyde d'alkylène, et
- éventuellement d'autres additifs.

2. Mélange selon la revendication 1, **caractérisé en ce que** le liant minéral comprend au moins un liant à prise hydraulique choisi dans la série des ciments, des ciments Portland, des ciments composites, des ciments comportant des proportions de pouzzolanes et des ciments de haut-fourneau.

3. Mélange selon la revendication 1 ou 2, **caractérisé en ce que** le composé de silicium substitué par fluoroorganyle est choisi dans la série des silanes substitués par fluoroorganyle et des siloxanes substitués par fluoroorganyle et des silicones substituées par fluoroorganyle ou d'un mélange correspondant, préférablement choisi dans la série des siloxanes substitués par fluoroalkyle ou des silanes monomériques substitués par fluoroalkyle, en particulier des siloxanes substitués par fluoroalkyle et portant des groupes alcoxy ou hydroxy ou des alcoxysilanes monomériques substitués par fluoroalkyle, ou des mélanges correspondants.

4. Mélange selon au moins l'une des revendications 1 à 3, **caractérisé en ce que** le composé de silicium substitué par fluoroorganyle est un fluoroalkylalcoxysilane de formule
**F₃C(CF₂)ₓ(C₂H₄)_{y}Si(CH₃)_{z}(OR)_{3-z},**
chaque R étant indépendamment les uns des autres choisi dans le groupe constitué par méthyle, éthyle, n-propyle et i-propyle, x étant un nombre entier doté d'une valeur de 0 à 16, y = 0 ou 1, et z = 0 ou 1, de préférence y = 1, et tout particulièrement préférablement y = 1, z = 0 et x = 4, 6, 8 ou 10.

5. Mélange selon la revendication 4, **caractérisé en ce que** le composé de silicium substitué par fluoroorganyle est le tridécafluoro-1,1,2,2-tétrahydrooctyltriéthoxysilane et/ou le tridécafluoro-1,1,2,2-tétrahydrooctyltriméthoxysilane.

6. Mélange selon au moins l'une des revendications 1 à 5, **caractérisé en ce que** la proportion du composé de silicium substitué par fluoroorganyle dans la poudre est de 2,5 à 90 % en poids.

7. Mélange selon au moins l'une des revendications 1 à 6, **caractérisé en ce que** le composé de silicium substitué par fluoroorganylalcoxy liquide est encapsulé dans un polymère soluble dans l'eau, présente une taille moyenne de gouttelette de 10 nm à 10 µm et n'est essentiellement pas hydrolysé.

8. Mélange selon au moins l'une des revendications 1 à 7, contenant des additifs, les additifs étant définis comme des granulats ainsi que des auxiliaires et le granulat étant choisi dans la série des agrégats, des sables, des graviers, des gravillons, du porphyre, de la farine de quartz, de la farine de calcaire, de la farine de pierre, des cendres volantes, de la microsilice et d'autres additifs silicatés ou des mélanges correspondants, préférablement au moins un granulat comportant une taille de grain maximale de 5 à 63 mm étant choisi, particulièrement préférablement étant un agrégat doté d'une taille de grain maximale de 32 mm et/ou un sable doté d'une taille de grain maximale de 5 mm.

9. Mélange selon au moins l'une des revendications 1 à 8, comprenant
- 2 à 60 % en poids de liant hydraulique, en particulier de ciment,
- 30 à 90 % en poids d'au moins un granulat,
- 0,001 à 8 % en poids d'un composé de silicium substitué par fluoroorganyle, et
- éventuellement 0 à 40 % en poids d'autres composants,
les composants utilisés à chaque fois donnant au total 100 % en poids.

10. Mélange selon la revendication 9, en particulier sous forme d'un mélange pour béton contenant en tant que composants supplémentaires
- 0,01 à 2 % en poids d'un agent fluidifiant, et/ou
- 0,01 à 10 % en poids d'autres auxiliaires, ou sous forme d'un mortier sec, contenant en tant que composants supplémentaires
- 0,001 à 3 % en poids d'éthers de cellulose et/ou de fibres de cellulose,
- 0,1 à 40 % en poids d'une poudre de dispersion à base d'un polymère filmogène, insoluble dans l'eau, et
- 0 à 10 % en poids d'autres auxiliaires,
les composants utilisés à chaque fois donnant au total 100 % en poids.

11. Mélange selon au moins l'une des revendications 1 à 10, contenant en tant que composant supplémentaire 1 à 50 % en poids d'eau, par rapport au mélange, les composants utilisés à chaque fois donnant au total 100 % en poids, l'eau étant incluse dans le calcul.

12. Utilisation d'une poudre redispersible dans l'eau, comprenant un polymère soluble dans l'eau comportant un ou plusieurs composés organiques de silicium encapsulés dans celui-ci, au moins un composé organique de silicium étant totalement ou partiellement fluoré et, lorsque des mélanges de composés de silicium substitués par fluoroorganyle et non substitués par fluoroorganyle sont utilisés, la proportion du composé de silicium substitué par fluor étant d'au moins 25 % en poids, par rapport à la quantité totale du composé de silicium utilisée, le polymère soluble dans l'eau et le composé de silicium formant des particules qui sont dispersibles et/ou redispersibles dans l'eau, le polymère soluble dans l'eau étant choisi dans la série des polysaccharides, des éthers de polysaccharides, des protéines, des polymérisats de vinyle, des condensats de formaldéhyde et des polymérisats d'oxyde d'alkylène, dans un mélange durcissant selon l'une quelconque des revendications 1 à 11, afin d'obtenir des caractéristiques « easy-to-clean » (facile à nettoyer) dans le mélange durci.

13. Utilisation selon la revendication 12, le composé de silicium substitué par fluoroorganyle dans la poudre étant un fluoroalkylalcoxysilane de formule
**F₃C(CF₂)ₓ(C₂H₄)_{y}Si(CH₃)_{z}(OR)_{3-z}**,
chaque R étant indépendamment les uns des autres choisi dans le groupe constitué par méthyle, éthyle, n-propyle et i-propyle, x étant un nombre entier doté d'une valeur de 0 à 16, y = 0 ou 1, et z = 0 ou 1, de préférence y = 1, et tout particulièrement préférablement y = 1, z = 0 et x = 4, 6, 8 ou 10.

14. Utilisation selon la revendication 13, **caractérisée en ce que** le composé de silicium substitué par fluoroorganyle est le tridécafluoro-1,1,2,2-tétrahydrooctyltriéthoxysilane et/ou le tridécafluoro-1,1,2,2-tétrahydrooctyltriméthoxysilane.

15. Utilisation d'un mélange durcissable selon l'une quelconque des revendications 1 à 11 pour la préparation de matériaux, en particulier de pièces, d'objets en béton, de béton de parement ou de corps moulés en béton.

16. Utilisation d'une poudre selon la revendication 1 dans un mélange durcissable de manière hydraulique, le mélange contenant 2 à 60 % en poids de ciment, 30 à 90 % en poids d'au moins un granulat, 0,001 à 8 % en poids du composé de silicium substitué par fluoroorganyle et éventuellement d'autres auxiliaires, afin d'obtenir des caractéristiques « easy-to-clean » (facile à nettoyer) dans le mélange durci.
